# EUROPEAN PATENT APPLICATION

(11) **EP 4 836 174 A1**
(43) Date of publication of application: **04.11.2026**
(21) Application number: 24909990.4
(22) Date of filing: 09.09.2024
(51) Int. Cl.: H01M 50/55, H01M 50/533, H01M 50/107

(54) **BATTERY CELL, BATTERY, BATTERY MODULE, BATTERY PACK, AND ELECTRICAL DEVICE**

(30) Priority: 29.12.2023 CN 202311863240
(71) Applicant: BYD Company Limited, Shenzhen, Guangdong 518118 (CN)
(72) Inventor: CHEN, Jiankang, Shenzhen, Guangdong 518118 (CN); LIU, Yanchu, Shenzhen, Guangdong 518118 (CN); ZHOU, Guishu, Shenzhen, Guangdong 518118 (CN); MA, Zhiying, Shenzhen, Guangdong 518118 (CN); WANG, Yadong, Shenzhen, Guangdong 518118 (CN)
(74) Representative: Mathys & Squire
(86) International application number: PCT/CN2024/117735
(87) International publication number: WO 2025/139044

(57) **Abstract**

A battery cell (100), a battery (1000), a battery module (2000), a battery pack (3000), and a power-consuming apparatus (4000) are provided. The battery cell (100) includes a housing (1), and the housing (1) includes a shell (11) and a cover plate assembly (12) that jointly define an accommodating cavity (13). The cover plate assembly (12) includes a cover plate (121) and a terminal post (122) that is insulatedly connected to the cover plate (121). An electrode core (20) is disposed in the accommodating cavity (13) and is disposed with a first tab (201) and a second tab (202) that have opposite polarities and are located at the same end of the electrode core (20). A first current collector plate (3) is disposed in the accommodating cavity (13) and located between the first tab (201) and the cover plate assembly (12). The terminal post (122) is electrically connected to the first tab (201) through the first current collector plate (3). A second current collector plate (4) is disposed in the accommodating cavity (13) and located between the second tab (202) and the cover plate assembly (12). The cover plate (121) is electrically connected to the second tab (202) through the second current collector plate (4), and the second current collector plate (4) is insulated from both the terminal post (122) and the first current collector plate (3).

## Description

### CROSS-REFERENCE TO RELATED APPLICATIONS

This application claims priority to Chinese Patent Application No. 202311863240.X, filed with the China National Intellectual Property Administration on December 29, 2023 and entitled "BATTERY CELL, BATTERY, BATTERY MODULE, BATTERY PACK, AND POWER-CONSUMING APPARATUS", which is incorporated herein by reference in its entirety.

### TECHNICAL FIELD

This application relates to the field of vehicle technologies, and in particular, to a battery cell, a battery, a battery module, a battery pack, and a power-consuming apparatus.

### BACKGROUND

As a core component of a power battery, a battery cell plays a crucial role. In the power battery, the battery cell determines quality and performance of the power battery, and also affects battery range and capacity of a vehicle.

In related technologies, the battery cell includes a tab and a current collector plate. The tab is connected to the current collector to allow current to smoothly flow out from the tab. However, a current-carrier flow path in the battery cell is long. As a result, structural impedance of the battery cell is high, which is unfavorable to normal use of the battery cell.

### SUMMARY

This application aims to resolve at least one of the technical problems existing in conventional technologies. Therefore, an objective of this application is to provide a battery cell, and an electrical connection design for components of the battery cell is optimised, which shortens a current-carrier flow path and reduces structural impedance of the battery cell.

A second objective of this application is to provide a battery that includes the foregoing battery cell.

A third objective of this application is to provide a battery module that uses the foregoing battery.

A fourth objective of this application is to provide a battery pack that uses the foregoing battery, or a battery pack that uses the foregoing battery module.

A fifth objective of this application is to propose a power-consuming apparatus that uses the foregoing battery pack.

A battery cell according to an embodiment of a first aspect of this application includes: a housing, wherein the housing includes a shell and a cover plate assembly, the cover plate assembly is disposed on the shell, the cover plate assembly and the shell jointly define an accommodating cavity, the cover plate assembly includes a cover plate and a terminal post, and the terminal post is insulatedly connected to the cover plate; an electrode core, wherein the electrode core is disposed in the accommodating cavity, a first tab and a second tab are disposed on the electrode core, the first tab and the second tab have opposite polarities, and the first tab and the second tab are located at the same end of the electrode core; a first current collector plate, wherein the first current collector plate is disposed in the accommodating cavity, the first current collector plate is located between the first tab and the cover plate assembly, and the terminal post is electrically connected to the first tab through the first current collector plate; and a second current collector plate, wherein the second current collector plate is disposed in the accommodating cavity, the second current collector plate is located between the second tab and the cover plate assembly, the cover plate is electrically connected to the second tab through the second current collector plate, and the second current collector plate is insulated from both the terminal post and the first current collector plate.

According to the battery cell in the embodiment of the first aspect of this application, assembling of the battery cell is simple, and assembling efficiency is high. Through arrangement, the terminal post is electrically connected to the first tab through the first current collector plate, the cover plate is electrically connected to the second tab through the second current collector plate, a layout of the battery cell, the first current collector plate, the second current collector plate, and the cover plate assembly is optimised, and an electrical connection design is optimised. This allows current carriers of the battery cell to flow in a vertical direction, which greatly shortens the current-carrier flow path, effectively reduces structural impedance of the battery cell, and therefore improves performance use of the battery cell. In addition, the cover plate is provided to be insulatedly connected to the terminal post, which can effectively prevent the current carriers on the terminal post from flowing to the cover plate. This prevents a short circuit from occurring between the first tab and the second tab of the battery cell, and therefore facilitates normal use of the battery cell.

According to some embodiments of this application, the second current collector plate is spaced apart from both the terminal post and the first current collector plate.

According to some embodiments of this application, the battery cell further includes a first insulating member. The first insulating member is disposed between the first tab and the second tab, and the first tab and the second tab are insulated from each other through the first insulating member.

According to some embodiments of this application, the first tab and the second tab are opposite to each other in a radial direction of the electrode core.

According to some embodiments of this application, the cover plate assembly further includes a base plate. The base plate is connected to the shell, an opening is formed on the base plate, the cover plate is disposed at the opening, and the terminal post passes through the cover plate.

According to some embodiments of this application, an outer peripheral edge of the cover plate has a stepped part. An edge of the opening has a mating part extending toward a center of the opening, and the mating part is fitted in the stepped part.

According to some embodiments of this application, on a side on which the second current collector plate is located, a minimum distance between the edge of the opening and an outer peripheral edge of the base plate is d₁, and d₁ satisfies 1.5 mm≤d₁≤4 mm.

According to some embodiments of this application, the battery cell further includes a second insulating member. The second insulating member is disposed between the base plate and the first current collector plate, and the base plate and the first current collector plate are insulated from each other through the second insulating member.

According to some embodiments of this application, at least one of the second current collector plate and the first current collector plate is a single-layer structural member.

According to some embodiments of this application, the second current collector plate includes: a first connecting part, wherein the second current collector plate is connected to the second tab through the first connecting part, and the first connecting part extends in a direction perpendicular to a central axis of the electrode core; a second connecting part, wherein the second connecting part is disposed on a side of the first connecting part away from the second tab; and a third connecting part, wherein the third connecting part is connected to a side of the second connecting part away from the first connecting part, the third connecting part extends in the direction perpendicular to the central axis of the electrode core, and the second connecting part is vertically connected between the third connecting part and the first connecting part.

According to some embodiments of this application, the first connecting part includes two first sub-connecting parts that are spaced apart. Each first sub-connecting part includes a first side edge and a second side edge. The first side edge and the second side edge are not on the same straight line, the first side edges of the two first sub-connecting parts are opposite to each other, and the second side edges of the two first sub-connecting parts are located on the same straight line. The second connecting part includes two second sub-connecting parts that are spaced apart. One side of one of the second sub-connecting parts is connected to the first side edge and the second side edge of one of the first sub-connecting parts, and one side of the other second sub-connecting part is connected to the first side edge and the second side edge of the other first sub-connecting part. The third connecting part includes a third sub-connecting part. The third sub-connecting part is connected to the other sides, opposite to the first side edges of the two first sub-connecting parts, of the two second sub-connecting parts.

According to some embodiments of this application, the third sub-connecting part is connected between the other sides, opposite to the first side edges of the two first sub-connecting parts, of the two second sub-connecting parts.

According to some embodiments of this application, the third connecting part includes a fourth sub-connecting part. One side of the fourth sub-connecting part is connected to the other sides, opposite to the second side edges of the two first sub-connecting parts, of the two second sub-connecting parts, and the third sub-connecting part, and the other side of the fourth sub-connecting part extends horizontally in a direction away from the first connecting part.

According to some embodiments of this application, the first side edge and the second side edge are perpendicular to each other.

According to some embodiments of this application, the second current collector plate is symmetrically disposed with respect to an extension direction of the third sub-connecting part.

According to some embodiments of this application, a height of the second current collector plate is h₃, a distance between a side surface of the cover plate facing the first current collector plate and a side surface of the first current collector plate away from the cover plate is h₄, and h₃ and h₄ satisfy 0 mm≤h₃-h₄≤1 mm.

According to some embodiments of this application, a connecting protrusion is provided on a side surface of the first current collector plate adjacent to the first tab, and the first current collector plate is connected to the first tab through the connecting protrusion.

According to some embodiments of this application, the connecting protrusion includes a first protrusion part and a second protrusion part. One end of the first protrusion part is connected to one end of the second protrusion part, and the other end of the first protrusion part and the other end of the second protrusion part extend in a direction away from each other. An included angle between the first protrusion part and the second protrusion part is β, and β satisfies 20°≤β≤80°.

According to some embodiments of this application, a notch is formed at a central edge of the first current collector plate away from the electrode core.

According to some embodiments of this application, the notch is located between the other end of the first protrusion part and the other end of the second protrusion part.

According to some embodiments of this application, the connecting protrusion is formed by a portion, of a side surface of the first current collector plate away from the first tab, protruding toward a side surface adjacent to the first tab, and the connecting protrusion forms a groove on the side surface of the first current collector plate away from the first tab, to form the connecting protrusion on the side surface adjacent to the first tab. A depth of the groove is h₅, and h₅ satisfies 0 mm<h₅≤2 mm.

According to some embodiments of this application, the first current collector plate and the cover plate assembly are integrated as a whole.

According to some embodiments of this application, the first current collector plate includes a main body part. The main body part is configured to connect to the first tab, the main body part is exposed on the cover plate in a thickness direction of the first current collector plate. A shortest distance between the main body part and a center of the terminal post is d₀, and d₀ satisfies 2 mm≤d₀≤8 mm.

According to some embodiments of this application, the terminal post passes through the cover plate. A first insulating separator and a sealing member are disposed between an outer peripheral surface of the terminal post and the cover plate. The sealing member is sleeved on the terminal post, and the first insulating separator is disposed on outer peripheral sides of the sealing member and the terminal post.

According to some embodiments of this application, the battery cell further includes: a connecting member, wherein the connecting member is connected to an end of the terminal post away from the first current collector plate in the thickness direction of the first current collector plate; and a second insulating separator, wherein the second insulating separator is disposed between the connecting member and the cover plate.

According to some embodiments of this application, a second insulating separator groove is formed on the second insulating separator. The connecting member is fitted in the second insulating separator groove, and the connecting member is insulated from the cover plate through the second insulating separator.

According to some embodiments of this application, the terminal post includes a first terminal post segment and a second terminal post segment that are connected to each other. The first terminal post segment passes through the cover plate and the second insulating separator and then is connected to the connecting member. The second terminal post segment is located on a side of the cover plate facing the first current collector plate, and the second terminal post segment is connected to the first current collector plate.

According to some embodiments of this application, an anti-rotation protrusion is provided on a side surface of the first insulating separator adjacent to the first current collector plate. The anti-rotation protrusion and the side surface of the first insulating separator adjacent to the first current collector plate jointly define an anti-rotation groove. A side of the anti-rotation groove adjacent to a center of the first current collector plate is open, and the second terminal post segment is fitted in the anti-rotation groove. An extension part is disposed on the first current collector plate. At least a portion of an outer peripheral edge of the extension part is fitted in the anti-rotation groove, and the extension part is located on a side of the second terminal post segment away from the cover plate.

According to some embodiments of this application, the at least portion of the outer peripheral edge of the extension part is adapted to a shape of an inner peripheral wall of the anti-rotation groove.

According to some embodiments of this application, a cover plate protrusion is provided on a side surface of the cover plate adjacent to the first insulating separator. A first insulating separator groove is formed on a side surface of the first insulating separator adjacent to the cover plate, and the cover plate protrusion is fitted in the first insulating separator groove.

According to some embodiments of this application, a first insulating separator through hole is formed on a bottom wall of the first insulating separator groove, and the first terminal post segment passes through the first insulating separator through hole.

According to some embodiments of this application, a width of the connecting member is w, a diameter of the terminal post is d₇, and w and d₇ satisfy 3.5 mm≤w-d₇≤6 mm.

According to some embodiments of this application, the battery cell further includes a separator. The separator is disposed in the shell, the separator is located between an end of the electrode core away from the first tab and an inner wall of the shell, and the electrode core is separated from the inner wall of the shell through the separator.

According to some embodiments of this application, at least one through-hole is formed in the separator. A pressure relief apparatus is disposed on the housing, the pressure relief apparatus is configured to be capable of releasing internal pressure of the battery cell, the pressure relief apparatus is located on a side of the housing away from the separator, and at least a portion of the pressure relief apparatus is opposite to the through-hole in a thickness direction of the separator.

According to some embodiments of this application, the pressure relief apparatus is configured to be capable of releasing the internal pressure of the battery cell. An area that the at least portion of the pressure relief apparatus overlaps the through hole along the separator is S₁, a cross-sectional area of the pressure relief apparatus taken along a plane perpendicular to the thickness direction of the separator S₂, and S₁ and S₂ satisfy 50%≤S₁/S₂≤100%.

According to some embodiments of this application, a cross-sectional area of the through hole taken along a plane perpendicular to the thickness direction of the separator is S₃, a cross-sectional area of the separator taken along a plane perpendicular to the thickness direction of the separator is S₄, and S₃ and S₄ satisfy 30%≤S₃/S₄≤80%.

A battery according to an embodiment of a second aspect of this application includes the battery cell described in the embodiment of the first aspect.

A battery module according to an embodiment of a third aspect of this application includes the battery described in the embodiment of the second aspect.

A battery pack according to an embodiment of a fourth aspect of this application includes the battery described in the embodiment of the second aspect, or the battery module described in the embodiment of the third aspect.

A power-consuming apparatus according to an embodiment of a fifth aspect of this application includes the battery pack according to the embodiment of the fourth aspect.

Additional aspects and advantages of this application will in part be described in the following descriptions, and will in part become apparent from the following descriptions, or may be learned through practice of this application.

### BRIEF DESCRIPTION OF DRAWINGS

The foregoing and/or additional aspects and advantages of this application will become apparent and readily understood from the descriptions of embodiments taken with reference to the following accompanying drawings, in which:
FIG. 1 is a diagram of a battery cell according to an embodiment of this application;
FIG. 2 is an exploded view of a battery cell according to an embodiment of this application;
FIG. 3 is a partial exploded view of a battery cell according to an embodiment of this application, where a housing is not shown;
FIG. 4 is a sectional view of an end part of a battery cell according to an embodiment of this application;
FIG. 5 is an enlarged view of a part A circled in FIG. 3;
FIG. 6 is a partial diagram of a battery cell according to an embodiment of this application, where a base plate is not shown;
FIG. 7 is a diagram of a second current collector plate of a battery cell according to an embodiment of this application;
FIG. 8 is a top view of assembling of a second current collector plate, a first current collector plate, and an electrode core of a battery cell according to an embodiment of this application;
FIG. 9 is a diagram of assembling of a cover plate assembly and a first current collector plate of a battery cell according to an embodiment of this application;
FIG. 10 is an exploded view of a cover plate assembly and a first current collector plate of a battery cell according to an embodiment of this application;
FIG. 11 is a diagram of a first current collector plate of a battery cell according to an embodiment of this application;
FIG. 12 is a diagram of a cover plate assembly of a battery cell according to an embodiment of this application;
FIG. 13 is a diagram of a first insulating separator of a battery cell according to an embodiment of this application;
FIG. 14 is a diagram of a first current collector plate of a battery cell from another perspective according to an embodiment of this application;
FIG. 15 is a top view of a battery cell according to an embodiment of this application, where a base plate is not shown;
FIG. 16 is a top view of a battery cell according to an embodiment of this application;
FIG. 17 is a diagram of an electrode core of a battery cell according to an embodiment of this application;
FIG. 18 is a diagram of a battery cell from another perspective according to an embodiment of this application;
FIG. 19 is an exploded view of a battery cell from another perspective according to an embodiment of this application;
FIG. 20 is a diagram of a sealing structure of a battery cell according to an embodiment of this application;
FIG. 21 is a diagram of a separator of a battery cell according to an embodiment of this application;
FIG. 22 is a diagram of assembling of a separator of a battery cell and a pressure relief apparatus according to an embodiment of this application;
FIG. 23 is a diagram of assembling of a separator of a battery cell and a pressure relief apparatus according to another embodiment of this application;
FIG. 24 is a diagram of assembling of a separator of a battery cell and a pressure relief apparatus according to still another embodiment of this application;
FIG. 25 is a block diagram of a battery according to an embodiment of this application;
FIG. 26 is a block diagram of a battery module according to an embodiment of this application;
FIG. 27 is a block diagram of a battery pack according to an embodiment of this application;
FIG. 28 is another block diagram of a battery pack according to an embodiment of this application; and
FIG. 29 is a block diagram of a power-consuming apparatus according to an embodiment of this application.

### Reference numerals:

power-consuming apparatus 4000; battery pack 3000; battery module 2000; battery 1000;
battery cell 100;
housing 1; shell 11; shell body 111; bottom cover plate 112; reinforcing rib 1121; liquid injection hole 1122; sealing structure 1123; elastic sealing gasket 1124; sealing cover 1125;
cover plate assembly 12; cover plate 121; stepped part 1211; cover plate through hole 1212; cover plate protrusion 1213; cover plate groove 1214; terminal post 122; first terminal post segment 1221; second terminal post segment 1222; base plate 123; opening 1231; mating part 1232; first insulating separator 124; anti-rotation protrusion 1241; anti-rotation groove 1242; first insulating separator groove 1243; first insulating separator through hole 1244; second insulating separator 125; second insulating separator groove 1251; connecting member 126; sealing member 127; first sealing segment 1271; second sealing segment 1272; accommodating cavity 13; pressure relief apparatus 14; protective member 141;
electrode core assembly 2; electrode core 20; first tab 201; second tab 202; central hole 203;
first current collector plate 3; connecting protrusion 31; first protrusion part 311; second protrusion part 312; notch 32; groove 33; extension part 34; main body part 35;
second current collector plate 4; first connecting part 41; first sub-connecting part 411; first side edge 4111; second side edge 4112; second connecting part 42; second sub-connecting part 421;
third connecting part 43; third sub-connecting part 431; fourth sub-connecting part 432;
first insulating member 5; second insulating member 6;
separator 7; through-hole 71; first through-hole group 72; first through-hole 721; second through-hole group 73; second through-hole 731.

### DESCRIPTION OF EMBODIMENTS

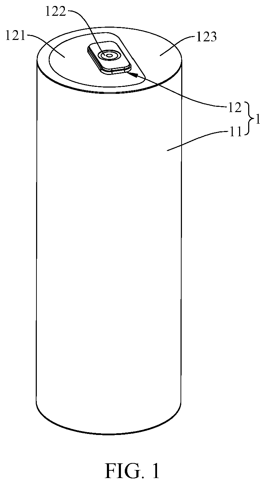

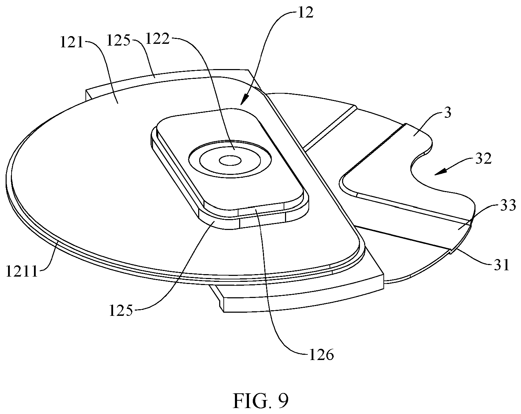

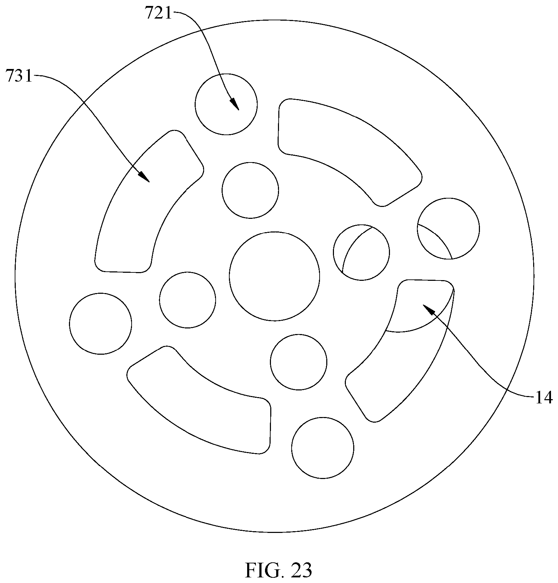

Embodiments of this application are described in detail below. Embodiments described with reference to the accompanying drawings are examples. A battery cell 100 according to an embodiment of a first aspect of this application is described below with reference to FIG. 1 to FIG. 24. The battery cell 100 may be a cylindrical battery cell, but is not limited thereto. In the following descriptions of this application, an example in which the battery cell 100 is the cylindrical battery cell is used for description.

As shown in FIG. 1, FIG. 2 and FIG. 3, the battery cell 100 according to the embodiment of the first aspect of this application includes a housing 1, an electrode core 20, a first current collector plate 3, and a second current collector plate 4.

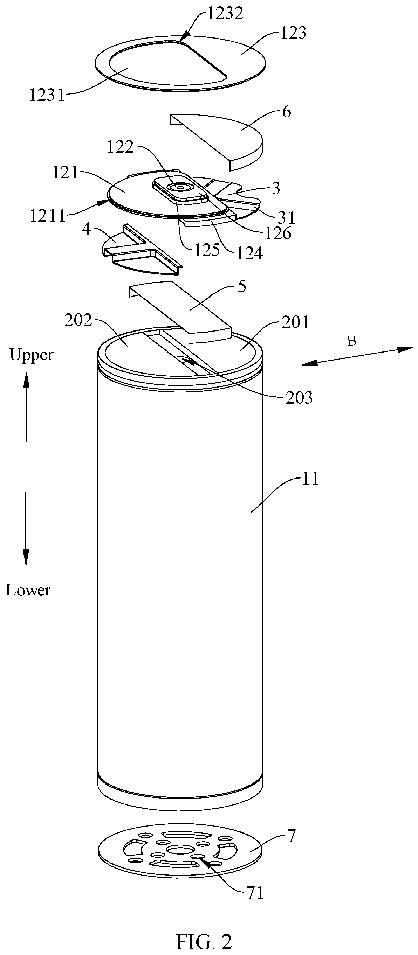

Specifically, the housing 1 includes a shell 11 and a cover plate assembly 12. The cover plate assembly 12 is disposed on the shell 11, and the cover plate assembly 12 and the shell 11 jointly define an accommodating cavity 13. For example, in examples in FIG. 1 and FIG. 2, the shell 11 is disposed to be in a cylindrical shape, and the cover plate assembly 12 is connected to an upper end of the shell 11 to jointly define the accommodating cavity 13. This improves manufacturing accuracy of the shell 11 and the cover plate assembly 12, thereby improving manufacturing accuracy of the housing 1. Moreover, this facilitates assembling of components inside the accommodating cavity 13 and the housing 1, thereby reducing assembling difficulty of the battery cell 100 and increasing assembling efficiency of the battery cell 100.

With reference to FIG. 2 to FIG. 4, the cover plate assembly 12 includes a cover plate 121 and a terminal post 122. The terminal post 122 is insulatedly connected to the cover plate 121. The electrode core 20, the first current collector plate 3, and the second current collector plate 4 are all disposed in the accommodating cavity 13. A first tab 201 and a second tab 202 are disposed on the electrode core 20. The first tab 201 and the second tab 202 have opposite polarities. The terminal post 122 is electrically connected to the first tab 201 through the first current collector plate 3, and the cover plate 121 is electrically connected to the second tab 202 through the second current collector plate 4.

For example, in the following descriptions of this application, an example in which the first tab 201 is a positive tab, the second tab 202 is a negative tab, the first current collector plate 3 is a positive current collector plate, the second current collector plate 4 is a negative current collector plate, and the terminal post 122 is a positive terminal post is used for description. For example, in examples in FIG. 2 to FIG. 5, the electrode core 20 extends in a vertical direction, and the first tab 201 is electrically connected to the terminal post 122 through the first current collector plate 3, so that current carriers of the first tab 201 flow out sequentially through the first current collector plate 3 and the terminal post 122 in the vertical direction. A current-carrier flow path is short, which reduces structural impedance of the battery cell 100 and facilitates normal use of the battery cell 100. The second tab 202 is electrically connected to the cover plate 121 through the second current collector plate 4, so that current carriers of the second tab 202 flow out sequentially through the second current collector plate 4 and the cover plate 121 in the vertical direction. A current-carrier flow path is short, and current carriers of a positive electrode and a negative electrode of the battery cell 100 do not interfere with each other, which reduces the structural impedance of the battery cell 100 and better facilitates normal use of the battery cell 100. In addition, the cover plate 121 is arranged to be insulatedly connected to the terminal post 122, which can effectively prevent the current carrier on the terminal post 122 from flowing to the cover plate 121. This prevents a short circuit from occurring between the first tab 201 and the second tab 202 of the battery cell 100, and therefore facilitates normal use of the battery cell 100. Moreover, a layout of the battery cell 100, the first current collector plate 3, the second current collector plate 4, and the cover plate assembly 12 is optimised, and an electrical connection design is optimised. This allows current carriers of the battery cell 100 to flow in the vertical direction, which greatly shortens current-carrier flow paths, effectively reduces the structural impedance of the battery cell 100, and therefore improves use performance of the battery cell 100.

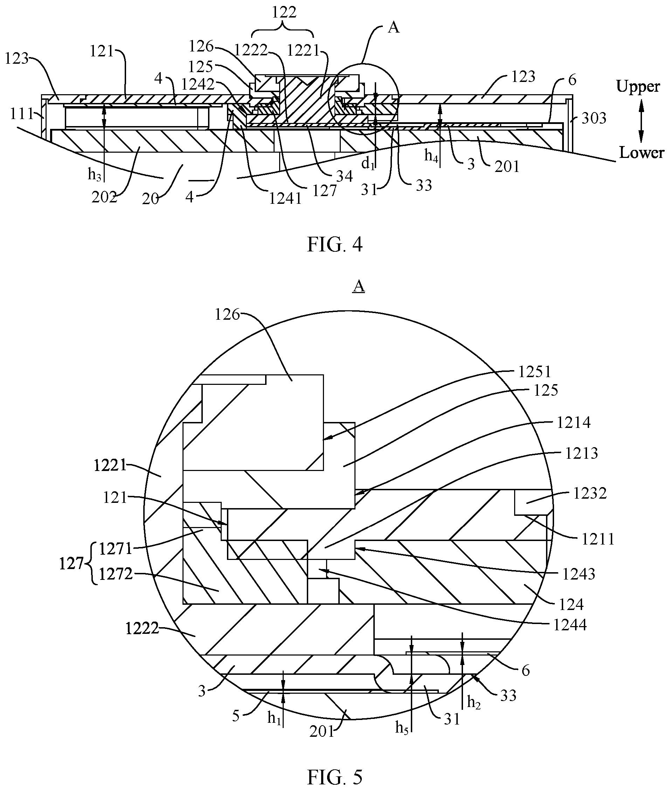

With reference to FIG. 2 and FIG. 4, the first tab 201 and the second tab 202 are located at the same end of the electrode core 20. The first current collector plate 3 is located between the first tab 201 and the cover plate assembly 12. The second current collector plate 4 is located between the second tab 202 and the cover plate assembly 12. The second current collector plate 4 is insulated from both the terminal post 122 and the first current collector plate 3. For example, in the examples in FIG. 2 and FIG. 4, the first tab 201 and the second tab 202 are both located at an upper end of the electrode core 20. The first tab 201 and the first current collector plate 3 are opposite to each other in the vertical direction, and the second tab 202 and the second current collector plate 4 are opposite to each other in the vertical direction. The cover plate assembly 12 is located above the first current collector plate 3 and the second current collector plate 4. The terminal post 122 and the first current collector plate 3 are located on the same side of the second current collector plate 4, and the first current collector plate 3 and the second current collector plate 4 are opposite to each other in a radial direction of the electrode core 20.

Therefore, the first tab 201 and the second tab 202 are located at the same end of the electrode core 20, so that an exhaust channel may be provided only on a side of the battery cell 100, to improve space utilization of the battery cell 100. In addition, the layout of the electrode core 20, the first current collector plate 3, the second current collector plate 4, and the cover plate assembly 12 is optimised, and the structure is compact. This facilitates smooth current-carrier passage of the first tab 201 and the second tab 202, and also improves integration of the battery cell 100, which better facilitates transportation and use of the battery cell 100. After the battery cell 100 is mounted, the second current collector plate 4 and the first current collector plate 3 are located at an end part of the electrode core 20, which facilitates detection of the second current collector plate 4 and the first current collector plate 3, thereby improving detectability of the second current collector plate 4 and the first current collector plate 3. In addition, the second current collector plate 4 is insulated from both the terminal post 122 and the first current collector plate 3, to prevent a short circuit from occurring between the second current collector plate 4, and the terminal post 122 and the first current collector plate 3. This allows the second current collector plate 4 and the cover plate assembly 12 to be normally used.

According to the battery cell 100 in the embodiment of the first aspect of this application, assembling of the battery cell 100 is simple, and assembly efficiency is high. Through arrangement, the terminal post 122 is electrically connected to the first tab 201 through the first current collector plate 3, the cover plate 121 is electrically connected to the second tab 202 through the second current collector plate 4, the layout of the battery cell 100, the first current collector plate 3, the second current collector plate 4, and the cover plate assembly 12 is optimised, and the electrical connection design is optimised. This allows the current carrier of the battery cell 100 to flow in the vertical direction, which greatly shortens the current-carrier flow path, effectively reduces the structural impedance of the battery cell 100, and therefore improves use performance of the battery cell 100. In addition, the cover plate 121 is arranged to be insulatedly connected to the terminal post 122, which can effectively prevent the current carrier on the terminal post 122 from flowing to the cover plate 121. This prevents a short circuit from occurring between the first tab 201 and the second tab 202 of the battery cell 100, and therefore facilitates normal use of the battery cell 100.

According to some embodiments of this application, with reference to FIG. 2 and FIG. 4, the second current collector plate 4 is spaced apart from both the terminal post 122 and the first current collector plate 3. For example, in the examples in FIG. 2 and FIG. 4, a lower end of the terminal post 122 is connected to the first current collector plate 3, and the connected first current collector plate 3 and the second current collector plate 4 are disposed opposite to each other in the radial direction of the battery cell 100. In this way, physical isolation between the first current collector plate 3 and the second current collector plate 4 is implemented, that is, the first current collector plate 3 and the second current collector plate 4 are not in direct contact with each other, to prevent a short circuit between the first current collector plate 3 and the second current collector plate 4, which facilitates normal use of the battery cell 100. In addition, a method of achieving a purpose of an insulating connection through spaced arrangement is simple, and is highly operable.

According to some embodiments of this application, with reference to FIG. 2, the battery cell 100 further includes a first insulating member 5. The first insulating member 5 is disposed between the first tab 201 and the second tab 202, and the first tab 201 and the second tab 201 are insulated from each other through the first insulating member 5. For example, in the example in FIG. 2, two sides of a width direction of a lower side surface of the first insulating member 5 (for example, a direction indicated by an arrow B in FIG. 2) are respectively connected to the first tab 201 and the second tab 202, and an upper side surface of the first insulating member 5 is connected to a portion of a lower side surface of the first current collector plate 3. Therefore, the first insulating member 5 is provided, so that the first tab 201 and the second tab 202 can be insulated, to prevent a short circuit between the second tab 202 and the first tab 201, which facilitates normal use of the battery cell 100. For example, the first insulating member 5 may be disposed as an insulating adhesive, so that the first insulating member 5 has adhesive effect, use and operation of the first insulating member 5 are simple, and use costs are low.

According to some embodiments of this application, with reference to FIG. 4 and FIG. 5, a thickness of the first insulating member 5 is h₁, and h₁ satisfies 20 um≤h₁≤200 um. For example, when the thickness h₁ of the first insulating member 5 is greater than 200 um, the first insulating member 5 uses many materials, costs of the first insulating member 5 are high, and therefore production costs of the battery cell 100 are high. When the thickness h₁ of the first insulating member 5 is less than 20 um, the connection effect between the first insulating member 5, and the first tab 201 and the second tab 202 is weak, which reduces stability during use of the first insulating member 5. Therefore, the thickness h₁ of the first insulating member 5 is set to satisfy 20 um≤h₁≤200 um, to reduce the materials used by the first insulating member 5, thereby reducing production costs of the first insulating member 5, and therefore reducing the production costs of the battery cell 100. In addition, connection stability between the first insulating member 5, and the first tab 201 and the second tab 202 is improved, which facilitates long-term stable use of the first insulating member 5.

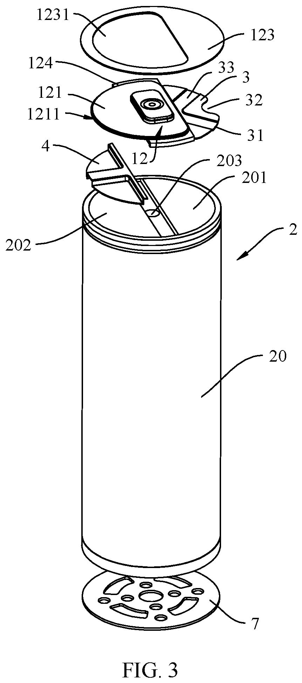

According to some embodiments of this application, with reference to FIG. 2 and FIG. 3, the first tab 201 and the second tab 202 are opposite to each other in the radial direction of the electrode core 20. For example, in the examples in FIG. 2 and FIG. 3, the first tab 201 and the second tab 202 are separately in a semicircular shape, the electrode core 20 may be in a cylindrical shape, and the first tab 201 and the second tab 202 are spaced apart in the width direction of the first insulating member 5. Therefore, the first tab 201 and the second tab 202 are less liable to contact each other, to prevent a short circuit from occurring between the first tab 201 and the second tab 202, which facilitates a circuit connection of the battery cell 100 and normal use of the battery cell 100. In addition, an area of the first tab 201 and an area of the second tab 202 are both large, which facilitates a connection between the first tab 201 and the first current collector plate 3, facilitates current-carrier passage between the first tab 201 and the first current collector plate 3, and also facilitates a connection between the second tab 202 and the second current collector plate 4, and facilitates current-carrier passage between the second tab 202 and the second current collector plate 4. It will be noted that a spacing size between sides, close to each other, of the first tab 201 and the second tab 202 may be set based on use to better meet an actual application.

Further, with reference to FIG. 2 and FIG. 3, the cover plate assembly 12 includes a base plate 123. The base plate 123 is connected to the shell 11. An opening 1231 is formed on the base plate 123. The cover plate 121 is disposed at the opening 1231, and the terminal post 122 passes through the cover plate 121. For example, in the examples in FIG. 2 and FIG. 3, the base plate 123 is located above the cover plate 121, and an outer peripheral surface of the base plate 123 is connected to the upper end of the shell 11. An edge of the opening 1231 matches an outer peripheral edge of the cover plate 121, and the terminal post 122 is exposed from the opening 1231. In this configuration, the base plate 123 can shield a portion of the cover plate 121, thereby improving protective effect of the base plate 123 on the cover plate 121 and therefore extending service life of the cover plate 121. In addition, overall appearance of the battery cell 100 is simplified, which improves aesthetics of the battery cell 100. In addition, an upper end of the terminal post 122 is exposed from the opening 1231, which helps the current carrier of the first tab 201 flow out through the terminal post 122. For example, the first tab 201 is the positive tab, and the second tab 202 is the negative tab. A current-carrier flow path of the positive electrode of the battery cell 100 is to sequentially flow through the first tab 201, the first current collector plate 3, and the terminal post 122, and then the current carrier is led out. A current-carrier flow path of the negative electrode of the battery cell 100 is to sequentially flow through the second tab 202, the cover plate 121, and the base plate 123, and then the current carriers are led out. In this way, the current-carrier flow paths of both the positive electrode and the negative electrode of the battery cell 100 are short, which further reduces the structural impedance of the battery cell 100 and better facilitates use of the battery cell 100.

Optionally, with reference to FIG. 2 and FIG. 3, the opening 1231 is approximately in a semicircular shape, and a shape of the cover plate 121 matches to a shape of the opening 1231. An annular joint between the base plate 123 and the cover plate 121, and an annular joint between the base plate 123 and the shell 11 are approximately designed in a similar "enclosed square pattern". That is, the joint between the base plate 123 and the cover plate 121 is in an annular shape, and the joint between the base plate 123 and the housing 11 is located on an outer periphery of the joint between the base plate 123 and the cover plate 121 and is in the annular shape. This prevents welding spot overlapping at welding positions of the base plate 123, the cover plate 121 and the shell 11, which causes poor welding, and also avoids an inflection point design, which causes poor welding at the inflection points.

According to some embodiments of this application, with reference to FIG. 4 and FIG. 5, an outer peripheral edge of the cover plate 121 has a stepped part 1211. An edge of the opening 1231 has a mating part 1232 extending toward a center of the opening 1231, and the mating part 1232 is fitted in the stepped part 1211. For example, in the examples in FIG. 4 and FIG. 5, an edge of the cover plate 121 is formed as the stepped part 1211, and a connection between the mating part 1232 and the base plate 123 is also in a stepped shape. This configuration facilitates assembling and compressing of the cover plate 121 and the base plate 123, and improves connection stability between the cover plate 121 and the base plate 123, thereby improving feasibility of a process and further improving assembling efficiency and assembling stability of the cover plate 121 and the base plate 123. Furthermore, the cover plate 121 and the base plate 123 are less likely to move relative to each other, which improves stability of the base plate 123 during long-term use.

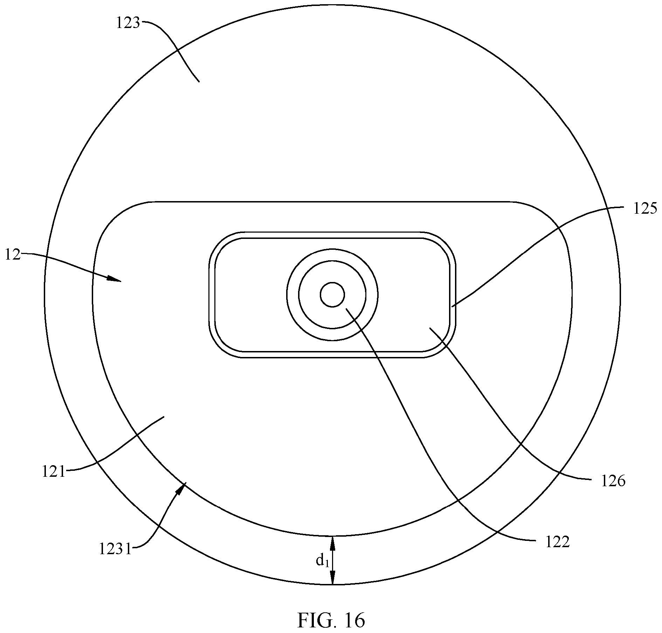

According to some embodiments of this application, with reference to FIG. 16, on a side on which the second current collector plate 4 is located, a minimum distance between the edge of the opening 1231 and an outer peripheral edge of the base plate 123 is d₁, and d₁ satisfies 1.5 mm≤d₁≤4 mm.

For example, when the minimum distance d₁ between the edge of the opening 1231 and the outer peripheral edge of the base plate 123 is greater than 4mm, a cross-sectional area of the cover plate 121 is small based on a fitting status between the edge of the opening 1231 and the edge of the cover plate 121. This makes a contact area between the cover plate 121 and the second current collector plate 4 small, reduces a welding area between the cover plate 121 and the second current collector plate 4, and also increases the structural impedance of the battery cell 100. When the minimum distance d₁ between the edge of the opening 1231 and the outer peripheral edge of the base plate 123 is less than 1.5mm, a distance between the edge of the opening 1231 and the outer peripheral edge of the base plate 123 is small on a side on which the second current collector plate 4 is located, and welding of the base plate 123 and the cover plate 121 and welding of the base plate 123 and the shell 11 affect each other. This reduces welding yield of the cover plate assembly 12. In addition, this reduces structural strength of the base plate 123 and shortens service life of the base plate 123. Therefore, the minimum distance d₁ between the edge of the opening 1231 and the outer peripheral edge of the base plate 123 is set to satisfy 1.5 mm≤d₁≤4 mm, to increase the cross-sectional area of the cover plate 121, increase the contact area between the cover plate 121 and the second current collector plate 4, and also reduce the structural impedance of the battery cell 100. In addition, this prevents mutual interference between welding of the base plate 123 and the cover plate 121 and welding of the base plate 123 and the shell 11, which improves the welding yield of the cover plate assembly 12.

According to some embodiments of this application, with reference to FIG. 2, the battery cell 100 further includes a second insulating member 6. The second insulating member 6 is disposed between the base plate 123 and the first current collector plate 3, and the base plate 123 and the first current collector plate 3 are insulated from each other through the second insulating member 6. For example, in the example in FIG. 2, the second insulating member 6 wraps an upper side surface and outer peripheral surface of the first current collector plate 3. In this way, the base plate 123 and the first current collector plate 3 are insulated from each other through the second insulating member 6. This prevents a short circuit from occurring between the base plate 123 and the first current collector plate 3, and permits the current carriers of the first current collector plate 3 to flow out after passing through the terminal post 122, which allows the cover plate assembly 12 to be normally used for a long time and also reduces the structural impedance. For example, the second insulating member 6 may be disposed as an insulation adhesive, so that the second insulating member 6 has an adhesive effect, use and operation of the second insulating member 6 are simple, and use costs are low.

According to some embodiments of this application, with reference to FIG. 2 and FIG. 5, a thickness of the second insulating member 6 is h₂, and h₂ satisfies 20 um≤h₂≤200 um. For example, when the thickness h₂ of the second insulating member 6 is greater than 200 um, the second insulating member 6 uses many materials, costs of the second insulating member 6 are high, and therefore production costs of the battery cell 100 are increased. When the thickness h₂ of the second insulating member 6 is less than 20 um, the connection effect between the second insulating member 6 and the first current collector plate 3 is weakened, which reduces insulation effect of the second insulating member 6. Therefore, the thickness h₂ of the second insulating member 6 is set to satisfy 20 um≤h₂≤200 um, to reduce the materials used by the second insulating member 6, thereby reducing production costs of the second insulating member 6, and therefore reducing the production costs of the battery cell 100. In addition, the connection effect between the second insulating member 6, and the base plate 123 and the first current collector plate 3 is strengthened, which facilitates long-term use of the second insulating member 6 and also facilitates normal working of the battery cell 100.

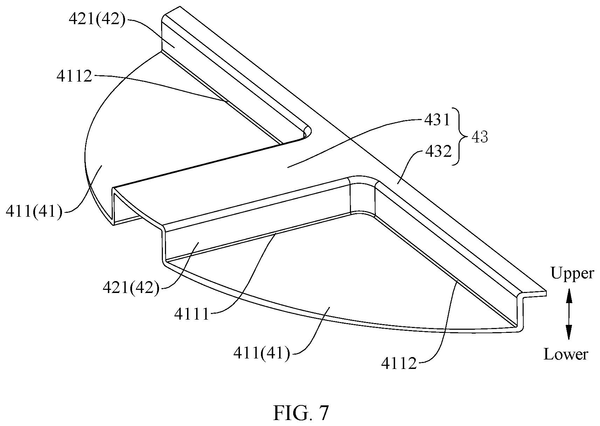

According to some embodiments of this application, with reference to FIG. 7 to FIG. 11, at least one of the second current collector plate 4 and the first current collector plate 3 is a single-layer structural member. For example, in the example of FIG. 2, both the first current collector plate 3 and the second current collector plate 4 are located at the upper end of the electrode core 20. The foregoing arrangement of the first current collector plate 3 and the second current collector plate 4 includes the following situations: first, only the first current collector plate 3 is a single-layer structural member; second, only the second current collector plate 4 is a single-layer structural member; and third, both the first current collector plate 3 and the second current collector plate 4 are single-layer structural members. In this way, current on the first tab 201 can flow out through the first current collector plate 3, and current on the second tab 202 can flow out through the second current collector plate 4. In addition, current carriers can directly pass through the second current collector plate 4 or the first current collector plate 3 in a thickness direction of the first current collector plate 3 or the second current collector plate 4. This shortens current-carrier flow paths, and effectively reduces the structural impedance of the battery cell 100, which facilitates normal use of the battery cell 100 and improves use performance of the battery cell 100. In addition, a structure of the single-layer structure is simple and uses few materials, which reduces production costs of the second current collector plate 4 and the first current collector plate 3, and therefore reduces the production costs of the battery cell 100. It will be noted that a "single-layer structural member" is a portion of a structural member itself without bending or overlapping in a thickness direction of the structural member. That is, the first current collector plate 3 itself is a single-layer portion without bending or overlapping, and the second current collector plate 4 itself is a single-layer portion without bending or overlapping.

Optionally, the second current collector plate 4 is connected to the second tab 202 through welding, and the first current collector plate 3 is connected to the first tab 201 through welding. For example, the second current collector plate 4 is laser welded to the second tab 202, and the first current collector plate 3 is laser welded to the first tab 201. Therefore, the connection between the second current collector plate 4 and the second tab 202 is secure, and the connection between the first current collector plate 3 and the first tab 201 is secure. This prevents the second current collector plate 4 from falling off the second tab 202, and prevents the first current collector plate 3 from falling off the first tab 201, and therefore improves connection stability of the first current collector plate 3 and the second current collector plate 4. Furthermore, compared with conventional torque welding, a connection through laser welding imposes no restriction on current carriers flowing through the first current collector plate 3 and the second current collector plate 4, and welding costs are low. This further reduces the production costs of the battery cell 100, and improves welding yield and detectability of the battery cell 100. In addition, the welding process is simple, which improves feasibility of the welding process.

According to some embodiments of this application, with reference to FIG. 7, the second current collector plate 4 includes a first connecting part 41, a second connecting part 42 and a third connecting part 43. Specifically, the second current collector plate 4 is connected to the second tab 202 through the first connecting part 41. The first connecting part 41 extends in a direction perpendicular to a central axis of the electrode core 20. The second connecting part 42 is disposed on a side of the first connecting part 41 away from the second tab 202. The third connecting part 43 is connected to a side of the second connecting part 42 away from the first connecting part 41, the third connecting part 43 extends in the direction perpendicular to the central axis of the electrode core 20, and the second connecting part 42 is vertically connected between the third connecting part 43 and the first connecting part 41.

For example, in an example in FIG. 7, a lower surface of the first connecting part 41 is connected to an upper surface of the second tab 202, a lower end of the second connecting part 42 is connected to a side edge of an upper surface of the first connecting part 41, and a side edge of a lower surface of the third connecting part 43 is connected to an upper end of the second connecting part 42. Therefore, the first connecting part 41 is connected to the second tab 202, and a contact area between the first connecting part 41 and the second tab 202 is large, which facilitates connection between the first connecting part 41 and the second tab 202 and achieves a secure connection. In addition, the second connecting part 42 may support the first connecting part 41 and the third connecting part 43, to improve structural strength of the second current collector plate 4 and therefore facilitate long-term stable use of the second current collector plate 4. The first connecting part 41 and the third connecting part 43 are parallel to the upper surface of the second tab 202, and the second connecting part 42 is perpendicular to the upper surface of the second tab 202. This configuration improves flatness of the second current collector plate 4, which facilitates connection of the second current collector plate 4 to other components (such as the cover plate 121) of the battery cell 100 through the third connecting part 43. This improves welding yield of the second current collector plate 4 with the other components of the battery cell 100, can effectively prevent the second current collector plate 4 from falling off the battery cell 100, and therefore improves stability during use of the second current collector plate 4. In addition, the second current collector plate 4 has a simple structure and is convenient for production and manufacturing, which improves production efficiency of the second current collector plate 4 and reduces the production costs of the second current collector plate 4.

Optionally, with reference to FIG. 7, the second current collector plate 4 is an integrally stamped part. The second current collector plate 4 includes the first connecting part 41 protruding toward the second tab 202, the third connecting part 43 protruding toward the cover plate 121, and the second connecting part 42 that is connected between the first connecting part 41 and the third connecting part 43. There is a height difference between the first connecting part 41 and the third connecting part 43. In this configuration, the second current collector plate 4 has a simple structure and is convenient for production and manufacturing. In addition, the second connecting part 42 has a function of a reinforcing rib to strengthen connection tightness between the first connecting part 41 and the third connecting part 43, and also has supporting effect on the first connecting part 41 and the third connecting part 43, to facilitate long-term use of the second current collector plate 4.

A single-layer current collector plate used in conventional technologies is usually a flat plate-shaped current collector plate without a reinforcing rib, resulting in poor flatness of a contact surface between the current collector plate and the tab, and a low welding yield. In solutions of the application, the first connecting part 41 of the second current collector plate 4 protrudes toward the second tab 202, and the third connecting part 43 protrudes away from the second tab 202. The first connecting part 41 is configured to be connected to the second tab 202, and the third connecting part 43 is configured to be connected to electrical lead-out members such as the cover plate 121 to lead out current from the second tab 202. The second connecting part 42 has effect of strengthening structural strength of the second current collector plate 4, and also supports and strengthens the connection between the first connecting part 41 and the second tab 202, as well as a connection to another electrical connecting member. This achieves better flatness of the connection between the second current collector plate 4 and the second tab 202, and prevent a joint from collapsing under stress.

According to some embodiments of this application, with reference to FIG. 7, the first connecting part 41 includes two first sub-connecting parts 411 that are spaced apart. Each first sub-connecting part 411 includes a first side edge 4111 and a second side edge 4112. The first side edge 4111 and the second side edge 4112 are not on the same straight line (that is, the first side edge 4111 and the second side edge 4112 are disposed at an included angle), the first side edges 4111 of the two first sub-connecting parts 411 are opposite to each other, and the second side edges 4112 of the two first sub-connecting parts 411 are located on the same straight line. For example, in the example in FIG. 7, the two first sub-connecting parts 411 are respectively located on two sides of the second connecting part 42. The first sub-connecting parts 411 may be provided in a sector shape, with the first side edge 4111 and the second side edge 4112 being two sides of the sector shape. In this way, the two first sub-connecting parts 411 can both be connected to the second tab 202, to improve overall stability of the connection between the second current collector plate 4 and the second tab 202, and achieve a secure connection. This prevents the second current collector plate 4 from falling off the second tab 202, and improves use performance of the battery cell 100. In addition, a contact area between the second current collector plate 4 and the second tab 202 is increased through the two first sub-connecting parts 411, which improves connection strength between the second current collector plate 4 and the second tab 202, and further reduces the structural impedance of the battery cell 100.

With reference to FIG. 7, the second connecting part 42 includes two second sub-connecting parts 421 that are spaced apart. One side of one of the second sub-connecting parts 421 is connected to the first side edge 4111 and the second side edge 4112 of one of the first sub-connecting parts 411, and one side of the other second sub-connecting part 421 is connected to the first side edge 4111 and the second side edge 4112 of the other first sub-connecting part 411. For example, in the example in FIG. 7, the two second sub-connecting parts 421 one-to-one correspond to the two first sub-connecting parts 411. The two second sub-connecting parts 421 are spaced apart in an arrangement direction of the two first sub-connecting parts 411. The second sub-connecting part 421 may be vertically arranged, and the second sub-connecting part 421 is bent and extended in a direction of the first side edge 4111 and the second side edge 4112, with a curved transition at a bent position. In this configuration, the second sub-connecting part 421 has a simple structure, which simplifies the structure of the second current collector plate 4, reduces production difficulty of the second current collector plate 4, and improves production efficiency of the second current collector plate 4. In addition, structural strength of the second sub-connecting part 421 is strengthened, which further improves supporting effect of the second connecting part 42 on the first connecting part 41 and the third connecting part 43, and therefore improves structural strength of the second current collector plate 4.

With reference to FIG. 7, the third connecting part 43 includes a third sub-connecting part 431, and the third sub-connecting part 431 is connected to the other sides, opposite to the first side edges 4111 of the two first sub-connecting parts 411, of the two second sub-connecting parts 421. For example, a lower surface of the third sub-connecting part 431 is connected to an upper side of the second sub-connecting part 421 opposite to the first side edge 4111. The third sub-connecting part 431 may be connected between the two second sub-connecting parts 421, and two sides of the third sub-connecting part 431 in a width direction of the third sub-connecting part 431 extend beyond the second sub-connecting parts 421. In this way, the second current collector plate 4 may be connected to the cover plate 121 through the third sub-connecting part 431.

Furthermore, the third connecting part 43 includes a fourth sub-connecting part 432. One side of the fourth sub-connecting part 432 is connected to the other sides, opposite to the second side edges 4112 of the two first sub-connecting parts 411, of the two second sub-connecting parts 421, and the third sub-connecting part 431, and the other side of the fourth sub-connecting part 432 extends horizontally in a direction away from the first connecting part 41.

For example, in the example in FIG. 7, the third connecting part 43 is approximately in a "T" shape, the third sub-connecting part 431 is a vertical segment of the "T", the fourth sub-connecting part 432 is a horizontal segment of the "T", and the two sides of the third sub-connecting part 431 in the width direction are respectively connected to sides of the two second sub-connecting parts 421 away from the two first side edges 4111 (that is, upper sides of the second sub-connecting parts 421 opposite to the first side edges 4111). A plane on which the fourth sub-connecting part 432 is located is parallel to a plane on which the first sub-connecting part 411 is located. A side of the fourth sub-connecting part 432 facing the first connecting part 41 is connected to the sides of the two second sub-connecting parts 421 away from the two second side edges 4112. The side of the fourth sub-connecting part 432 facing the first connecting part 41 is connected to a side of the third sub-connecting part 431 facing the fourth sub-connecting part 432. In this configuration, the two second sub-connecting parts 421 are connected through the third sub-connecting part 431, so that the second current collector plate 4 is integrally connected, and structural strength of the second current collector plate 4 is improved. Furthermore, providing the fourth sub-connecting part 432 increases an area of the third connecting part 43, to improve connection stability between an upper surface of the second current collector plate 4 and another component of the battery cell 100 when the second current collector plate 4 is connected to another component of the battery cell 100. In addition, the second current collector plate 4 has a simple structure and is convenient for production, which improves production efficiency of the second current collector plate 4. Furthermore, the fourth sub-connecting part 432 has a function of a reinforcing rib, which improves strength and flatness of the second current collector plate 4 and increases welding yield.

According to some embodiments of this application, with reference to FIG. 7, the first side edge 4111 and the second side edge 4112 are perpendicular to each other. In this configuration, a cross section of the second current collector plate 4 is approximately in a semicircular shape, and a contact area between the second current collector plate 4 and the second tab 202 through the first sub-connecting part 411 is large, to facilitate connection between the second current collector plate 4 and the second tab 202. In addition, the second current collector plate 4 has a stable structure, which facilitates long-term use of the second current collector plate 4.

According to some embodiments of this application, with reference to FIG. 7, the second current collector plate 4 is symmetrically disposed with respect to an extension direction (that is, an extension direction of the first side edge 4111) of the third sub-connecting part 431. In this configuration, the third sub-connecting part 431 and the corresponding second sub-connecting part 421 below are both located in the middle of the second current collector plate 4, which can better strengthen supporting effect on the first connecting part 41 and the third connecting part 43. Under compression, force on the second current collector plate 4 is uniformly distributed, which avoids lateral tilting and tearing of the connection between the second current collector plate 4 and the second tab 202.

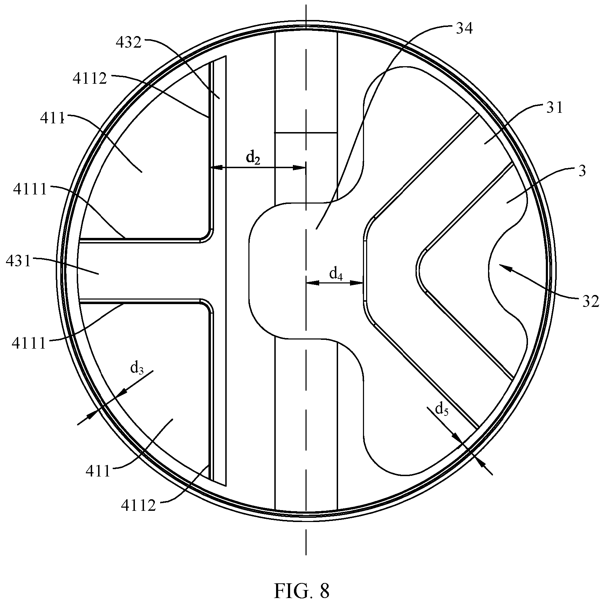

According to some embodiments of this application, with reference to FIG. 8, a minimum distance between the first connecting part 41 and a central axis of the electrode core 20 is d₂, and d₂ satisfies 2 mm≤d₂≤7.7 mm. For example, in an example in FIG. 8, a minimum distance between the second side edge 4112 and the central axis of the electrode core 20 is d₂. For example, when the minimum distance between the first connecting part 41 and the central axis of the electrode core 20 is greater than 7.7 mm, the contact area between the first connecting part 41 and the second tab 202 is small, which reduces uniformity of the welding spot distribution and increases structural impedance of the electrode core 20. When the minimum distance between the first connecting part 41 and the central axis of the electrode core 20 is less than 2 mm, a distance between the first connecting part 41 and the first current collector plate 3 is small. As a result, the second current collector plate 4 is liable to contact the first current collector plate 3, a short circuit easily occurs between the second current collector plate 4 and the first current collector plate 3, which further affects normal use of the battery cell 100. Therefore, the minimum distance d₂ between the first connecting part 41 and the central axis of the electrode core 20 is set to satisfy 2 mm≤d₂≤7.7 mm, to improve uniformity of the welding spot distribution at a joint between the first connecting part 41 and the second current collector plate 4, and reduce structural impedance of the electrode core 20. In addition, this prevents a short circuit caused by contact between the second current collector plate 4 and the first current collector plate 3, and facilitates long-term normal use of the battery cell 100.

According to some embodiments of this application, with reference to FIG. 8, the first connecting part 41 is located at a radially inner side of an outer peripheral edge of the electrode core 20, and a distance between the first connecting part 41 and the outer peripheral edge of the electrode core 20 is d₃, and d₃ satisfies 0.5 mm≤d₃≤2 mm. For example, when the distance d₃ between the first connecting part 41 and the outer peripheral edge of the electrode core 20 is greater than 2 mm, a connection area between the first connecting part 41 and the second tab 202 is small, and connection stability between the second current collector plate 4 and the second tab 202 is reduced. This is unfavorable for current-carrier passage, and increases structural impedance of the battery cell 100. When the distance d₃ between the first connecting part 41 and the outer peripheral edge of the electrode core 20 is less than 0.5 mm, the first connecting part 41 is liable to contact the shell 11 disposed on an outer periphery of the electrode core 20. Therefore, the current carriers of the battery cell 100 flows through the shell 11, causing structural impedance of the battery cell 100 to be high. Therefore, the distance d₃ between the first connecting part 41 and the outer peripheral edge of the electrode core 20 is set to satisfy 0.5 mm≤d₃≤2 mm, so that the connection area between the first connecting part 41 and the second tab 202 is large, the connection between the second current collector plate 4 and the second tab 202 is secure, and structural impedance of the battery cell 100 is reduced. In addition, this can effectively prevent the first connecting part 41 from contacting the shell 11 of the battery cell 100, thereby preventing the current carriers of the battery cell 100 from flowing through the shell 11, and further reducing structural impedance of the battery cell 100.

According to some embodiments of this application, the second current collector plate 4 is a stamped and formed part made of steel or copper. Copper features corrosion resistance and electrical conductivity. This facilitates normal use of the second current collector plate 4 and improves structural strength of the second current collector plate 4, which facilitates long-term stable use of the second current collector plate 4. In addition, stamping and forming the copper improves flatness of the second current collector plate 4, thereby improving use performance of the second current collector plate 4. In addition, steel has a specific degree of hardness, and helps improve structural strength of the second current collector plate 4.

According to some embodiments of this application, as shown in FIG. 4 and FIG. 5, a height (that is, a distance between an upper surface of the third connecting part 43 and a lower surface of the first connecting part 41) of the second current collector plate 4 is h₃, a distance between a side surface of the cover plate 121 facing the first current collector plate 3 and a side surface of the first current collector plate 3 away from the cover plate 121 is h₄, and h₃ and h₄ satisfy 0 mm≤h₃-h₄≤1 mm. In other words, h₄ is a vertical distance between a lower surface of the cover plate 121 and a lower surface of the first current collector plate 3. In an assembling process of the battery cell 100, the cover plate assembly 12 is first connected to the first current collector plate 3, and then is connected to the second current collector plate 4. For example, when the height h₃ of the second current collector plate 4 and the distance h₄ between the side surface of the cover plate 121 facing the first current collector plate 3 and the side surface of the first current collector plate 3 away from the cover plate 121 satisfy h₃-h₄ is greater than 1 mm, the thickness of the second current collector plate 4 is large, which is unfavorable for contact between the cover plate 121 and an upper surface of the second current collector plate 4. This reduces the contact area between the cover plate 121 and the second current collector plate 4, reduces connection stability between the cover plate 121 and the second current collector plate 4, and is unfavorable for normal use of the battery cell 100. When the height h₃ of the second current collector plate 4 and the distance h₄ between the side surface of the cover plate 121 facing the first current collector plate 3 and the side surface of the first current collector plate 3 away from the cover plate 121 satisfy h3-h4 being 0, the height of the second current collector plate 4 is equal to the vertical distance between the lower surface of the cover plate 121 and the lower surface of the first current collector plate 3, and the second current collector plate 4 fits perfectly between the cover plate 121 and the second tab 202. Therefore, the height h₃ of the second current collector plate 4 and the distance h₄ between the side surface of the cover plate 121 facing the first current collector plate 3 and the side surface of the first current collector plate 3 away from the cover plate 121 are set to satisfy 0 mm≤h₃-h₄≤1 mm, to improve sealing performance of contact between the second current collector plate 4, and the cover plate 121 and the second tab 202, and improve welding yield and connection stability between the second current collector plate 4, and the cover plate 121 and the second tab 202. This facilitates long-term stable use of the second current collector plate 4.

According to some other embodiments of this application, with reference to FIG. 4, the second current collector plate 4 is in an interference fit between the second tab 202 and the cover plate 121. For example, in the example in FIG. 4, the upper surface of the second current collector plate 4 is connected to the lower surface of the cover plate 121, a lower surface of the second current collector plate 4 is connected to the second tab 202, and the height of the second current collector plate 4 may be greater than a vertical height between the second tab 202 and the cover plate 121. For example, an interference amount may be set to may be in a range of greater than 0 mm to 1 mm. Therefore, the second current collector plate 4 may be in the interference fit between the second tab 202 and the cover plate 121. An optimised interference fit amount is set, so that contact between the second current collector plate 4, and the second tab 202 and the cover plate 121 is more compact. This improves sealing performance at a contact point between the second current collector plate 4 and the cover plate 121, and improves welding yield between the second current collector plate 4, and the second tab 202 and the cover plate 121.

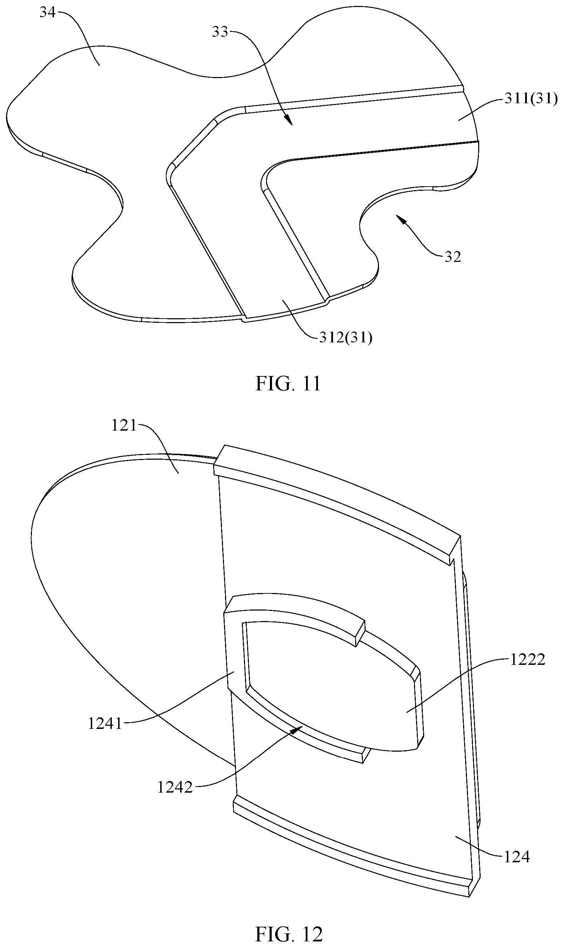

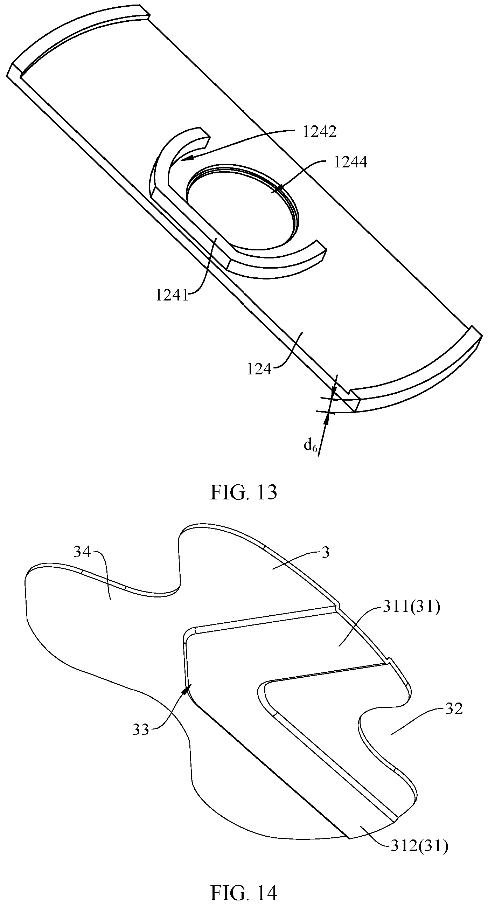

According to some embodiments of this application, with reference to FIG. 11 and FIG. 14, a connecting protrusion 31 is provided on a side surface of the first current collector plate 3 adjacent to the first tab 201, and the first current collector plate 3 is connected to the first tab 201 through the connecting protrusion 31. For example, in examples in FIG. 11 and FIG. 14, the connecting protrusion 31 is formed by a portion of region of the first current collector plate 3 protruding toward the first tab 201. In this configuration, the first current collector plate 3 contacts and is connected to the first tab 201 through the connecting protrusion 31, which facilitates an interference fit between the first current collector plate 3 and the first tab 201. This improves welding yield when the first current collector plate 3 is connected to the first tab 201 through welding, and increases connection strength between the first current collector plate 3 and the first tab 201. In addition, the connecting protrusion 31 has a simple structure, which simplifies the structure of the first current collector plate 3 and facilitates mass production of the first current collector plate 3.

Further, with reference to FIG. 11 and FIG. 14, the connecting protrusion 31 includes a first protrusion part 311 and a second protrusion part 312. One end of the first protrusion part 311 is connected to one end of the second protrusion part 312, and the other end of the first protrusion part 311 and the other end of the second protrusion part 312 extend in a direction away from each other. For example, in examples in FIG. 11 and FIG. 14, the connecting protrusion 31 may be provided in a "V" shape. An end of the first protrusion part 311 close to a center of the first current collector plate 3 is connected to an end of the second protrusion part 312 close to the center of the first current collector plate 3. The other end of the first protrusion part 311 and the other end of the second protrusion part 312 both extend in a direction away from the center of the first current collector plate 3. The first protrusion part 311 and the second protrusion part 312 are symmetrical with respect to a center line of the first current collector plate 3. In this configuration, the connecting protrusion 31 has a simple structure, and the design is optimised. Therefore, after the first current collector plate 3 is connected to the first tab 201, overall connection stability between the first current collector plate 3 and the first tab 201 is improved, and shaking or rotation of the first current collector plate 3 is avoided, and stability during use of the battery cell 100 is improved. In addition, manufacturing difficulty of the connecting protrusion 31 is low, which reduces the manufacturing difficulty of the first current collector plate 3 and improves production efficiency of the first current collector plate 3.

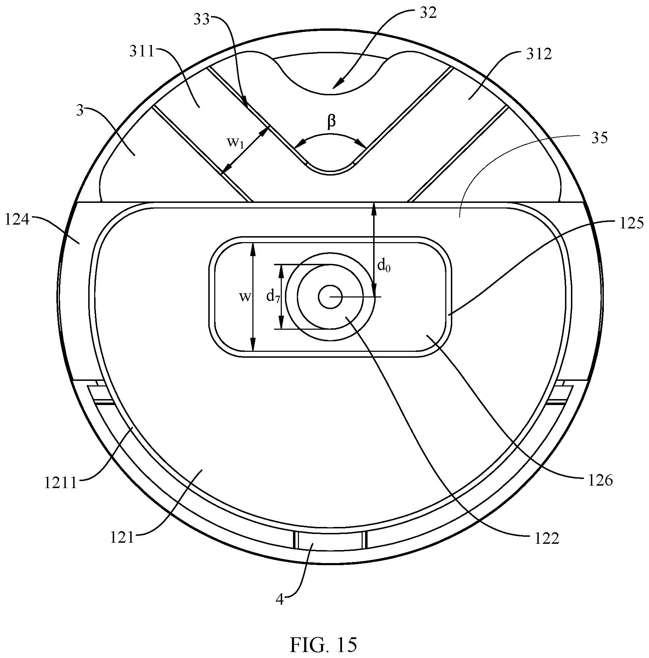

With reference to FIG. 15, an included angle between the first protrusion part 311 and the second protrusion part 312 is β, and β satisfies: 20°≤β≤80°. For example, when the included angle β between the first protrusion part 311 and the second protrusion part 312 is greater than 80°, a distance between the other end of the first protrusion part 311 and the other end of the second protrusion part 312 is large. As a result, a distance between welding spots on an edge of the first current collector plate 3 is large, and connection stability between the first current collector plate 3 and the first tab 201 of the battery cell 100 is reduced. When the included angle β between the first protrusion part 311 and the second protrusion part 312 is less than 20°, the distance between the other end of the first protrusion part 311 and the other end of the second protrusion part 312 is small, and a distance between opposite sides of the first protrusion part 311 and the second protrusion part 312 is small, which reduces uniformity of distribution of welding spots of the first current collector plate 3, and reduces connection stability of the first current collector plate 3. In this configuration, the included angle β between the first protrusion part 311 and the second protrusion part 312 is set to satisfy 20°≤β≤80°, so that positions of the first protrusion part 311 and the second protrusion part 312 are appropriately distributed, to improve uniformity of distribution of welding spots of the first current collector plate 3, and improve connection stability of the first current collector plate 3, which facilitates long-term use of the first current collector plate 3.

According to some embodiments of this application, with reference to FIG. 11 and FIG. 14, the end of the first protrusion part 311 and the end of the second protrusion part 312 are adjacent to the second current collector plate 4 (that is, the end of the first protrusion part 311 and the end of the second protrusion part 312 are adjacent to a center of the electrode core 20), and the other end of the first protrusion part 311 and the other end of the second protrusion part 312 extend in a direction away from the second current collector plate 4 (that is, a direction away from the center or the central axis of the electrode core 20) and pass through an outer peripheral edge of the first current collector plate 3. For example, in the examples in FIG. 11 and FIG. 14, the end of the first protrusion part 311 and the end of the second protrusion part 312 are connected. In this configuration, overlapping regions between the first protrusion part 311 and the second protrusion part 312, and the first tab 201 are increased, so that a contact area is increased, and structural impedance of the battery cell 100 is reduced. In addition, the first protrusion part 311 and the second protrusion part 312 have simple structures, which facilitates production of the connecting protrusion 31, and improves production efficiency of the first current collector plate 3. Furthermore, ends of the first protrusion part 311 and the second protrusion part 312 that are away from each other are disposed to pass through the outer peripheral edge of the first current collector plate 3, so that a thickness of the edge of the first current collector plate 3 is reduced, which better facilitates current-carrier passage and further reduces structural impedance.

According to some embodiments of this application, with reference to FIG. 8 to FIG. 11, a notch 32 is formed at the edge of the first current collector plate 3. For example, in examples in FIG. 8 to FIG. 11, the notch 32 is recessed toward a center direction of the first current collector plate 3, and the notch 32 may be provided in a semicircular shape. Therefore, when the first current collector plate 3 and the first tab 201 are connected through laser welding, in a cooling process of the first current collector plate 3 after welding, due to different coefficients of thermal expansion, some regions shrink more than other regions, which causes residual stress in the welding region. Providing the notch 32 may relieve the residual stress, to prevent poor welding caused by thermal deformation during welding of the first current collector plate 3 and the first tab 201, and further improves connection strength between the first current collector plate 3 and the first tab 201. For example, the notch 32 is located between the other end of the first protrusion part 311 and the other end of the second protrusion part 312. Therefore, the notch 32 is formed at a position near a middle part of the edge of the first current collector plate 3. This better relieves the foregoing residual stress, but is not limited thereto.

According to some embodiments of this application, with reference to FIG. 8, a minimum distance between connecting protrusion 31 and the central axis of the electrode core 20 is d₄, and d₄ satisfies 2 mm≤d₄≤8 mm. For example, when the minimum distance d₄ between the connecting protrusion 31 and the central axis of the electrode core 20 is greater than 8 mm, an overlapping region between the first current collector plate 3 and the first tab 201 is reduced, a contact area between the first current collector plate 3 and the first tab 201 is reduced. This increases structural impedance of the battery cell 100. When the minimum distance d₄ between the connecting protrusion 31 and the central axis of the electrode core 20 is less than 2 mm, a distance between the first current collector plate 3 and the second current collector plate 4 is small. As a result, the first current collector plate 3 is liable to contact the second current collector plate 4, and a short circuit easily occurs between the second current collector plate 4 and the first current collector plate 3, which further affects normal use of the battery cell 100. Therefore, the minimum distance d₄ between the connecting protrusion 31 and the central axis of the electrode core 20 is set to satisfy 2 mm≤d₄≤8 mm, to increase the contact area between the first current collector plate 3 and the first tab 201, and reduce structural impedance of the battery cell 100. In addition, this can effectively prevent a short circuit from occurring between the first current collector plate 3 and the second current collector plate 4, and facilitates normal use of the battery cell 100. Moreover, a welding spot trajectory of the first current collector plate 3 and the first tab 201 is close to an inner side of the electrode core 20, which improves uniformity of distribution of welding spots, and better facilitates connection between the first current collector plate 3 and the first tab 201.

According to some embodiments of this application, with reference to FIG. 11 and FIG. 14, the connecting protrusion 31 is formed by a portion, of a side surface of the first current collector plate 3 away from the first tab 201, protruding toward the side surface of the first current collector plate 3 adjacent to the first tab 201. For example, in the examples in FIG. 11 and FIG. 14, the connecting protrusion 31 is formed by a portion of an upper surface of the first current collector plate 3 protruding downward. This reduces a thickness of a region, on the first current collector plate 3, on which the connecting protrusion 31 is located, and shortens a current-carrier path flowing through the connecting protrusion 31, which better facilitates use of the first current collector plate 3 and further reduces the structural impedance. In addition, the connecting protrusion 31 has a simple structure, and manufacturing difficulty is low, which reduces the production costs of the first current collector plate 3 and improves production efficiency of the first current collector plate 3.

With reference to FIG. 11 and FIG. 14, a groove 33 is formed by the connecting protrusion 31 on the side surface of the first current collector plate 3 away from the first tab 201, to form the connecting protrusion 31 on the side surface of the first current collector plate 3 adjacent to the first tab 201. A depth of the groove 33 is h₅, and h₅ satisfies 0 mm <h₅≤2 mm. For example, in the examples in FIG. 11 and FIG. 14, the connecting protrusion 31 forms a V-shaped groove 33 on the upper surface of the first current collector plate 3. When the depth h₅ of the groove 33 is greater than 2 mm, a height of a side wall of the groove 33 is high, which reduces structural strength of the connecting protrusion 31, and reduces structural strength of the first current collector plate 3. When the depth h₅ of the groove 33 is equal to 0 mm, the lower surface of the first current collector plate 3 is in full contact with the first tab 201 and welded thereto. This causes a large welding area, high welding costs, and is unfavorable for connection between the first current collector plate 3 and other components of the battery cell 100. Therefore, the depth h₅ of the groove 33 is set to satisfy 0 mm<h₅≤2 mm, which improves structural strength of the connecting protrusion 31, and improves structural strength of the first current collector plate 3. In addition, this reduces the welding costs of the first current collector plate 3, and also facilitates the connection between the first current collector plate 3 and other components of the battery cell 100.

Optionally, with reference to FIG. 8, a minimum distance between a side of the first current collector plate 3 away from the central axis of the electrode core 20 and an outer peripheral surface of the electrode core 20 is d₅, and d₅ satisfies 0.5 mm≤d₅≤2 mm. For example, when the minimum distance d₅ between the side of the first current collector plate 3 away from the central axis of the electrode core 20 and the outer peripheral surface of the electrode core 20 is greater than 2 mm, a connection area between the first current collector plate 3 and the first tab 201 is small, which is unfavorable for current-carrier passage between the first tab 201 and the first current collector plate 3, and increases structural impedance of the battery cell 100. When the minimum distance d₅ between the first current collector plate 3 and the outer peripheral surface of the electrode core 20 is less than 0.5 mm, the first current collector plate 3 is liable to contact the shell 11 on the outer periphery of the electrode core 20. Therefore, the current carriers of the battery cell 100 flow through the shell 11, causing structural impedance of the battery cell 100 to be high. Therefore, the distance d₅ between the first current collector plate 3 and the outer peripheral edge of the electrode core 20 is set to satisfy 0.5 mm≤d₅≤2 mm, so that the connection area between the first current collector plate 3 and the first tab 201 is large, and the connection between the first current collector plate 3 and the first tab 201 is stable, which facilitates current-carrier passage, and reduces structural impedance of the battery cell 100. In addition, this effectively prevents the first current collector plate 3 from contacting the shell 11 of the battery cell 100, thereby preventing the current carriers of the battery cell 100 from flowing through the shell 11, and further reducing structural impedance of the battery cell 100. In addition, a welding trajectory of the first current collector plate 3 and the first tab 201 is closer to the inner side of the electrode core 20, which improves uniformity of distribution of welding spots of the first current collector plate 3.

According to some alternative embodiments of this application, the first current collector plate 3 may be provided as a stamped and formed part made of an aluminum sheet. An aluminum part has specific structural strength. This improves structural strength of the first current collector plate 3, which facilitates long-term stable use of the first current collector plate 3. In addition, the aluminum part has conductivity, which helps the current carriers flow through the first current collector plate 3. In addition, stamping and forming the aluminum sheet improves flatness of the first current collector plate 3. This improves use performance of the first current collector plate 3, but is not limited thereto.

According to some embodiments of this application, the first current collector plate 3 and the cover plate assembly 12 are integrated as a whole. For example, in the examples in FIG. 2 and FIG. 3, after the terminal post 122 is connected to the cover plate 121, a lower end face of the terminal post 122 is connected to the upper side surface of the first current collector plate 3. In this configuration, integration allows the terminal post 122 and the first current collector plate 3 to be connected in advance, for example, through welding and then the integrated first current collector plate 3 is connected to the first tab 201. This improves the integration level of the cover plate assembly 12, facilitates use of the cover plate assembly 12, and improves use performance of the cover plate assembly 12. Using the cover plate assembly 12 in the battery cell 100 facilitates assembling of the cover plate assembly 12 and other components of the battery cell 100, simplifies assembly operation steps of the battery cell 100, reduces assembling difficulty, and improves assembling efficiency. In a separated structure of related technologies, in order to allow a welding spot of the current collector and the tab to be as close as possible to the center of the electrode core, the terminal post and the current collector may only be welded in the middle part of the electrode core. However, during welding from top to bottom, insulation fails during welding because there is an insulating member in the middle, which causes a battery short circuit. Usually, only a process of welding from bottom to top may be selected. However, laser welding generates excessively high heat, and therefore only torque welding may be used. Torque welding is unfavorable to improving a current-carrying capability of the battery cell and causes high costs. Therefore, the solution of this application can avoid use of torque welding between the terminal post 122 and the first current collector plate 3, improves the current-carrying capability of the battery cell 100, and facilitates use of the battery cell 100.

According to some embodiments of this application, with reference to FIG. 15, the first current collector plate 3 includes a main body part 35. The main body part 35 is configured to connect to the first tab 201, the main body part 35 is exposed on the cover plate 121 in a thickness direction (for example, the vertical direction) of the first current collector plate 3. A shortest distance between the main body part 35 and a center of the terminal post 122 is d₀, and d₀ satisfies 2 mm≤d₀≤8 mm.

For example, in an example in FIG. 15, a portion of the first current collector plate 3 is located below the cover plate 121 and connected to the terminal post 122, and another portion (that is, the main body part 35) of the first current collector plate 3 is exposed outside the cover plate 121. After the first current collector plate 3 is welded and connected to the terminal post 122, the first current collector plate 3 is then welded and connected to the first tab 201. To reduce impedance and ensure the current-carrying capability, it is necessary to weld as many turns of the tab as possible, that is, the welding trajectory of the first current collector plate 3 needs to be as close to the center of the electrode core 20 as possible. Therefore, when the shortest distance d₀ between an edge of the main body part 35 of the first current collector plate 3 close to the terminal post 122 and the center of the terminal post 122 is less than 2 mm, that is, when a distance between an edge of the cover plate 121 facing the first current collector plate 3 and a central axis of the terminal post 122 is small, an overlapping area of the first current collector plate 3 and the cover plate 121 in the vertical direction is small. This is unfavorable for the connection between the first current collector plate 3 and the terminal post 122. When the shortest distance d₀ between the edge of the main body part 35 of the first current collector plate 3 close to the terminal post 122 and the center of the terminal post 122 is greater than 8 mm, the welding trajectory of the first current collector plate 3 and the first tab 201 is far from the center of the terminal post 122, which increases impedance and reduces the current-carrying capability. Therefore, the shortest distance d₀ between the main body part 35 of the first current collector plate 3 and the center of the terminal post 122 is set to satisfy 2 mm≤d₀≤8 mm, and the distance between the main body part 35 of the first current collector plate 3 exposed on the cover plate 121 and the center of the terminal post 122 is reasonably set, which facilitates connection between the first current collector plate 3, and the first tab 201 and the terminal post 122, and can also reduce impedance and improve the current-carrying capability.

Optionally, d₀ further satisfies 4 mm≤d₀≤8 mm. Therefore, when the shortest distance d₀ between the main body part 35 and the center of the terminal post 122 is less than 4 mm, that is, when a distance between an edge of the cover plate 121 facing the first current collector plate 3 and a central axis of the terminal post 122 is small, an overlapping area of the first current collector plate 3 and the cover plate 121 in the vertical direction is small. This is unfavorable for connection between the first current collector plate 3 and the terminal post 122. Therefore, the shortest distance d₀ between the main body part 35 and the center of the terminal post 122 is set to satisfy 2 mm≤d₀≤8 mm, and the distance between the main body part 35 of the first current collector plate 3 exposed on the cover plate 121 and the center of the terminal post 122 is reasonably set, which facilitates connection between the first current collector plate 3, and the first tab 201 and the terminal post 122, and can also reduce impedance and improve the current-carrying capability. For example, d₀ may be set to 2 mm, 4 mm, or 8 mm to make the distance between the main body part 35 and the center of the terminal post 122 more optimised.

According to some embodiments of this application, with reference to FIG. 4, FIG. 5, and FIG. 10, the terminal post 122 passes through the cover plate 121. A first insulating separator 124 and a sealing member 127 are disposed between an outer peripheral surface of the terminal post 122 and the cover plate 121. The sealing member 127 is sleeved on the terminal post 122, and the first insulating separator 124 is disposed on outer peripheral sides of the sealing member 127 and the terminal post 122.

For example, in examples in FIG. 4, FIG. 5, and FIG. 10, a lower end of the terminal post 122 is connected to the first current collector plate 3 after passing through the cover plate 121. The sealing member 127 is sleeved on the outer peripheral surface of the terminal post 122. The first insulating separator 124 is located on outer peripheral sides of lower parts of the sealing member 127 and the terminal post 122. The sealing member 127 is in an annular shape, and the sealing member 127 is an insulating member. In this way, the terminal post 122 sequentially passes through the first insulating separator 124, the sealing member 127, and the cover plate 121. The terminal post 122 and the cover plate 121 compress the sealing member 127, to strengthen tightness of connection between the terminal post 122, the first insulating separator 124, the sealing member 127, and the cover plate 121. This improves sealing performance of the cover plate assembly 12. Moreover, this has insulation effect on the cover plate 121 and the terminal post 122, to effectively prevent the short circuit from occurring between the cover plate 121 and the terminal post 122. In addition, the first insulating separator 124 is provided, to effectively separate the lower part of the terminal post 122 from the lower surface of the cover plate 121. This can effectively prevent the current carriers on the terminal post 122 from flowing to the cover plate 121, and prevents a short circuit from occurring between the terminal post 122 and the cover plate 121, which facilitates normal use of the terminal post 122 and the cover plate 121.

According to some embodiments of this application, with reference to FIG. 4, FIG. 5, and FIG. 10, the battery cell 100 further includes a connecting member 126 and a second insulating separator 125. The connecting member 126 is connected to an end of the terminal post 122 away from the first current collector plate 3 in the thickness direction of the first current collector plate 3, and the second insulating separator 125 is disposed between the connecting member 126 and the cover plate 121.

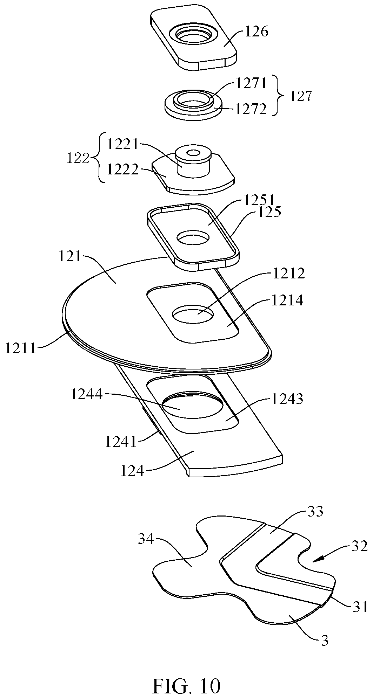

For example, in the example in FIG. 10, the upper end of the terminal post 122 passes through the cover plate 121, the second insulating separator 125, and the connecting member 126, and then is riveted and welded to the connecting member 126. Therefore, the connecting member 126 may limit the upper end of the terminal post 122, to prevent the terminal post 122 from moving downward and separating from the cover plate 121, and improving connection stability between the terminal post 122 and the cover plate 121. In addition, the connecting member 126 cooperates with the upper end of the terminal post 122. Through cooperation between the terminal post 122 and the connecting member 126, overall connection secureness between the terminal post 122, the first insulating separator 124, the cover plate 121, the second insulating separator 125, and the connecting member 126 is strengthened. This improves integrity of the cover plate assembly 12, and better facilitates use of the cover plate assembly 12. Furthermore, this also improves sealing performance of assembling of the connecting member 126, the terminal post 122, and the cover plate 121, and improves sealing performance of the cover plate assembly 12. In addition, the current carriers of the first current collector plate 3 can smoothly flow through the terminal post 122 and then flow out, which shortens current-carrier flow paths, and reduces structural impedance of the battery cell 100.

For example, in the examples in FIG. 10, FIG. 12, and FIG. 13, the first insulating separator 124 and the second insulating separator 125 are respectively located on two sides of the cover plate 121 in the thickness direction, and the upper end of the terminal post 122 sequentially passes through the first insulating separator 124, the cover plate 121, and the second insulating separator 125. Therefore, the second insulating separator 125 can insulate and separate the connecting member 126 from the cover plate 121, which can effectively prevent the current carriers on the terminal post 122 and the connecting member 126 from flowing to the cover plate 121, to prevent a short circuit from occurring between the terminal post 122, the connecting member 126 and the cover plate 121. This facilitates normal use of the battery cell 100.

Further, with reference to FIG. 10, a second insulating separator groove 1251 is formed on the second insulating separator 125, the connecting member 126 is fitted in the second insulating separator groove 1251, and the connecting member 126 is insulated from the cover plate 121 through the second insulating separator 125. For example, in the example in FIG. 10, the second insulating separator groove 1251 is formed on an upper side surface of the second insulating separator 125. A lower side surface of the connecting member 126 abuts against a bottom wall of the second insulating separator groove 1251, and a first terminal post segment 1221 of the terminal post 122 passes through the second insulating separator groove 1251 and is connected to the connecting member 126. In this configuration, the second insulating separator groove 1251 may have a positioning effect on the connecting member 126, to facilitate rapid assembling of the connecting member 126 and the second insulating separator 125, and improves assembly efficiency and assembly accuracy of the connecting member 126 and the second insulating separator 125. In addition, the second insulating separator groove 1251 has a limiting effect on the connecting member 126, to prevent the connecting member 126 from rotating on a plane on which the second insulating separator 125 is located, improve connection stability between the connecting member 126 and the second insulating separator 125, and improve assembly stability of the cover plate assembly 12. In addition, the second insulating separator 125 is configured to separate the connecting member 126 from the cover plate 121, which can prevent the battery cell 100 from being short-circuited after the connecting member 126 is electrically connected to the cover plate 121. The connecting member 126 increases a weld (for example, laser weld) area between the first current collector plate 3 and the first tab 201 of the battery cell 100.

According to some embodiments of this application, with reference to FIG. 10, the terminal post 122 includes a first terminal post segment 1221 and a second terminal post segment 1222 that are connected to each other. The first terminal post segment 1221 passes through the cover plate 121 and the second insulating separator 125 and then is connected to the connecting member 126. The second terminal post segment 1222 is located on a side of the cover plate 121 facing the first current collector plate 3, and the second terminal post segment 122 is connected to the first current collector plate 3.

For example, in the example in FIG. 10, the first terminal post segment 1221 extends in the vertical direction. An upper end of the first terminal post segment 1221 passes through the cover plate 121 and the second insulating separator 125 and then extends out. A lower end of the first terminal post segment 1221 is connected to an upper side surface of the second terminal post segment 1222. A lower side surface of the second terminal post segment 1222 is connected to the upper surface of the first current collector plate 3. A cross-sectional area of an outer periphery of the second terminal post segment 1222 is larger than a cross-sectional area of an outer periphery of the first terminal post segment 1221. In this configuration, the first terminal post segment 1221 facilitates the connection between the terminal post 122 and the cover plate 121, and the second terminal post segment 1222 facilitates the connection between the terminal post 122 and the first current collector plate 3. This facilitates the connection between the terminal post 122, and the cover plate 121 and the first current collector plate 3, and the connection is stable, which facilitates long-term use of the terminal post 122. In addition, the second terminal post segment 1222 limits the terminal post 122 from a lower side of the cover plate 121, restricting the terminal post 122 from moving upward, to improve connection stability between the terminal post 122 and the cover plate 121, and improve overall stability of the cover plate 121. Moreover, the terminal post 122 has a simple structure, which facilitates use of the terminal post 122, and also facilitates production and manufacturing of the terminal post 122.

According to some embodiments of this application, with reference to FIG. 10, a cover plate through hole 1212 is formed on the cover plate 121. The first terminal post segment 1221 passes through the cover plate through hole 1212, at least a portion of the sealing member 127 is disposed between an outer peripheral surface of the first terminal post segment 1221 and an inner peripheral wall of the cover plate through hole 1212, and the first insulating separator 124 is disposed on outer peripheral sides of the sealing member 127 and the second terminal post segment 1222.

For example, in the examples in FIG. 4, FIG. 5, and FIG. 10, the cover plate through hole 1212 extends through the cover plate 121 in the thickness direction (that is, the vertical direction in FIG. 2) of the cover plate 121, a portion of the sealing member 127 is sleeved on the outer peripheral side of the first terminal post segment 1221, and another portion of the sealing member 127 is located between an upper surface of the second terminal post segment 1222 and the lower surface of the cover plate 121. Alternatively, the entire sealing member 127 may be located between the outer peripheral surface of the first terminal post segment 1221 and the inner peripheral wall of the cover plate through hole 1212, and an upper part of the first insulating separator 124 can separate the upper surface of the second terminal post segment 122 from the lower surface of the cover plate 121, to achieve an insulating connection between the terminal post segment 122 and the cover plate 121. In this configuration, the cover plate through hole 1212 facilitates positioning of the terminal post 122, which facilitates assembling of the terminal post 122 and the cover plate 121, and improves assembling efficiency of the cover plate 121. In addition, the sealing member 127 and the first insulating separator 124 jointly act on the terminal post 122, to permit the insulating connection between the terminal post 122 and the cover plate 121, and also further improve sealing performance of assembling of the connecting member 126, the terminal post 122, and the cover plate 121.

According to some embodiments of this application, with reference to FIG. 12 to FIG. 14, an anti-rotation groove 1242 is formed on a side surface of the first insulating separator 124 adjacent to the first current collector plate 3, and the second terminal post segment 1222 is fitted in the anti-rotation groove 1242. An extension part 34 is disposed on the first current collector plate 3. At least a portion of an outer peripheral edge of the extension part 34 is fitted in the anti-rotation groove 1242, and the extension part 34 is connected to a side of the second terminal post segment 1222 away from the cover plate 121.

For example, in examples in FIG. 12 and FIG. 13, the anti-rotation groove 1242 is formed on a lower surface of the first insulating separator 124, and the outer peripheral surface of the second terminal post segment 1222 is attached to a side wall of the anti-rotation groove 1242. The extension part 34 is located inside the anti-rotation groove 1242. An outer peripheral surface of the extension part 34 is attached to the side wall of the anti-rotation groove 1242, and an upper surface of the extension part 34 is attached to a lower surface of the second terminal post segment 1222. In other words, a shape of an edge of the extension part 34 toward the anti-rotation groove 1242 and a shape of an edge of the second terminal post segment 1222 toward the anti-rotation groove 1242 are adapted to a shape of the anti-rotation groove 1242, so that the extension part 34 and the second terminal post segment 1222 may be fitted in the anti-rotation groove 1242. Certainly, the lower surface of the first insulating separator 124 may be recessed in a direction away from the first current collector plate 3 to form the anti-rotation groove 1242, as long as the anti-rotation groove 1242 can limit and prevent rotation of the second terminal post segment 1222. It will be noted that the foregoing "at least a portion" means that only a portion of the outer peripheral edge of the extension part 34 is fitted in the anti-rotation groove 1242, and another portion of the outer peripheral edge of the extension part 34 is located outside the anti-rotation groove 1242. Certainly, "at least a portion" may also mean that the entire outer peripheral edge of the extension part 34 is fitted in the anti-rotation groove 1242. This may be specifically set based on use requirements to better actual practical application.

In this configuration, after the first insulating separator 124 is assembled with the terminal post 122 and the first current collector plate 3, the anti-rotation groove 1242 has limiting effect on the second terminal post segment 1222 and the extension part 34. This can effectively prevent the terminal post 122 and the first current collector plate 3 from rotating in a plane perpendicular to the vertical direction, which improves stability of assembling of the cover plate 121 with the first current collector plate 3 and the terminal post 122. Moreover, this also prevents the first current collector plate 3 from rotating and from contacting with the second current collector plate 4, which reduces requirements on the manufacturing accuracy of the electrode core 20, the first tab 201, and the second tab 202, and improves production efficiency of the electrode core 20. Furthermore, when the first insulating separator 124 is assembled with the second terminal post segment 1222 and the extension part 34, the anti-rotation groove 1242 facilitates positioning of the second terminal post segment 1222 and the extension part 34, which helps improve rapid assembly of the first insulating separator 124 with the terminal post 122 and the first current collector plate 3, and improves assembly efficiency of the cover plate 121.

According to some embodiments of this application, with reference to FIG. 12 and FIG. 13, an anti-rotation protrusion 1241 is provided on a side surface of the first insulating separator 124 adjacent to the first current collector plate 3. The anti-rotation protrusion 1241 and the side surface of the first insulating separator 124 adjacent to the first current collector plate 3 jointly define an anti-rotation groove 1242. A side of the anti-rotation groove 1242 adjacent to a center of the first current collector plate 3 is open, and the second terminal post segment 1222 is fitted in the anti-rotation groove 1242. An extension part 34 is disposed on the first current collector plate 3. At least a portion of an outer peripheral edge of the extension part 34 is fitted in the anti-rotation groove 1242, and the extension part 34 is located on a side of the second terminal post segment 1222 away from the cover plate 121.

For example, in the examples in FIG. 12 and FIG. 13, the anti-rotation protrusion 1241 may be provided in a "C" shape. A shape of the anti-rotation protrusion 1241 matches a shape of an end of the second terminal post segment 1222 away from the first current collector plate 3 and a shape of a side of the extension part 34 away from the first current collector plate 3. A side of the extension part 34 away from the center of the first current collector plate 3 is assembled with the anti-rotation protrusion 1241. This helps insert the extension part 34 of the first current collector plate 3 into the anti-rotation groove 1242 from the open side of the anti-rotation groove 1242 in a direction perpendicular to the vertical direction, which facilitates assembling of the extension part 34 with the anti-rotation protrusion 1241 and improves assembling efficiency of the first insulating separator 124 and the first current collector plate 3. In addition, this also facilitates full contact between the anti-rotation protrusion 1241, and the second terminal post segment 1222 and the extension part 34, to improve connection stability between the first insulating separator 124, and the terminal post 122 and the first current collector plate 3. Moreover, the anti-rotation protrusion 1241 has a simple structure, which simplifies a structure of the first insulating separator 124 and better facilitates mass production of the first insulating separator 124. Certainly, the anti-rotation protrusion 1241 is not limited to the structure described above. The anti-rotation protrusion 1241 may be a continuous or discontinuous cylinder (for example, a plurality of cylinders are spaced apart, and the plurality of main bodies act together on the second terminal post segment 122 to implement limiting and rotation effect) or a sphere, but is not limited thereto.

According to some embodiments of this application, with reference to FIG. 12 and FIG. 13, at least a portion of the outer peripheral edge of the extension part 34 is adapted to the shape of the inner peripheral wall of the anti-rotation groove 1242. For example, in the examples in FIG. 12 and FIG. 13, an outer peripheral edge of the extension part 34 away from the center of the first current collector plate 3 is attached to an inner peripheral wall of the anti-rotation groove 1242, and a side surface of the extension part 34 away from the opening 1231 is formed as a plane. Therefore, this facilitates full contact between an outer peripheral edge of the first extension part 34 away from the center of the first current collector plate 3, and the inner wall of the anti-rotation groove 1242, which further improves adaptation between the extension part 34 and the anti-rotation groove 1242, and strengthens limiting effect of the anti-rotation groove 1242 on the first current collector plate 3. This further prevents the first current collector plate 3 from rotating, and therefore improves stability during use of the cover plate 121.

Optionally, the terminal post 122 is connected to the first current collector plate 3 through welding. Therefore, the connection between the terminal post 122 and the first current collector plate 3 is secure, thereby preventing the first current collector plate 3 from falling off the terminal post 122, and therefore improving stability during long-term use of the first current collector plate 3 and the terminal post 122. In addition, the welding process is simple, which improves feasibility of the welding process, but is not limited thereto.

According to some embodiments of this application, with reference to FIG. 10, a thickness of the first insulating separator 124 is d₆, and d₆ satisfies 0.5 mm≤d₆≤2.0 mm. When the thickness d₆ of the first insulating separator 124 is greater than 2 mm, the first insulating separator 124 uses many materials, production costs of the first insulating separator 124 are increased, and therefore production costs of the cover plate assembly 12 are increased. In addition, space occupied by the first insulating separator 124 is increased. This increases an overall size of the cover plate assembly 12, which is unfavorable for use of the cover plate assembly 12. When the thickness d₆ of the first insulating separator 124 is less than 0.5 mm, the thickness of the first insulating separator 124 is small, and production of the first insulating separator 124 is difficult. This makes the first insulating separator 124 difficult to produce. In addition, this reduces wear resistance of the first insulating separator 124. As a result, the first insulating separator 124 is prone to damage by friction, which shortens service life of the first insulating separator 124. Therefore, the thickness d₆ of the first insulating separator 124 is set to satisfy 0.5 mm≤d₆≤2.0 mm, to reduce the production costs of the first insulating separator 124, thereby reducing the production costs of the cover plate assembly 12. In addition, the thickness of the first insulating separator 124 is moderate, which facilitates production of the first insulating separator 124. In addition, this improves wear resistance of the first insulating separator 124, and prevents the first insulating separator 124 from being damaged, which extends service life of the first insulating separator 124. It will be noted that the first insulating separator 124 may be of a plate-shaped or approximately plate-shaped structure, and the thickness d₆ is a thickness of a main body portion of the plate-shaped structure excluding the anti-rotation protrusion 1241 or a recessed region.

Optionally, the first insulating separator 124 is an injection-molded part. Therefore, molding quality of the first insulating separator 124 is improved, and production efficiency and manufacturing accuracy of the first insulating separator 124 are also improved. In addition, integrity of the first insulating separator 124 is also improved, which facilitates long-term use of the first insulating separator 124.

According to some embodiments of this application, with reference to FIG. 4 and FIG. 5, a cover plate protrusion 1213 is provided on a side surface of the cover plate 121 adjacent to the first insulating separator 124, and the cover plate through hole 1212 extends through the cover plate protrusion 1213. A first insulating separator groove 1243 is formed on a side surface of the first insulating separator 124 adjacent to the cover plate 121. A first insulating separator through hole 1244 is formed on a bottom wall of the first insulating separator groove 1243. The first terminal post segment 1221 passes through the first insulating separator through hole 1244, and the cover plate protrusion 1213 is fitted in the first insulating separator groove 1243.

For example, in the examples in FIG. 4, FIG. 5, and FIG. 10, the first insulating separator through hole 1244 extends through the first insulating separator 124 in the thickness direction of the first insulating separator 124, the first insulating separator through hole 1244 is opposite to the cover plate through hole 1212, and the first terminal post segment 1221 sequentially passes through the first insulating separator through hole 1244 and the cover plate through hole 1212 to extend above the cover plate 121. A lower surface of the cover plate protrusion 1213 contacts the bottom wall of the first insulating separator groove 1243, and an outer peripheral surface of the cover plate protrusion 1213 contacts an inner side wall of the first insulating separator groove 1243. Therefore, through cooperation between the cover plate protrusion 1213 and the first insulating separator groove 1243, the first insulating separator groove 1243 has a positioning effect on the cover plate protrusion 1213, which facilitates rapid assembly of the cover plate 121 and the first insulating separator 124, and improves assembly efficiency of the cover plate assembly 12. In addition, the cover plate protrusion 1213 has a simple structure, which facilitates assembly of the cover plate 121 with other components, and also simplifies the structure of the cover plate 121 and facilitates production and manufacturing of the cover plate 121.

Optionally, with reference to FIG. 4, FIG. 5, and FIG. 10, the cover plate protrusion 1213 is formed by a portion, of a side surface of the cover plate 121 away from the first current collector plate 3, protruding toward a side surface of the first current collector plate 3. For example, in the examples in FIG. 4, FIG. 5, and FIG. 10, the cover plate protrusion 1213 is formed by a portion of an upper surface of the cover plate 121 protruding downward. In this configuration, the cover plate protrusion 1213 has a simple structure, and is convenient for production and manufacturing, which improves production efficiency of the cover plate 121. In addition, integrity of the cover plate 121 is improved, thereby increasing structural strength of the cover plate protrusion 1213 and improving stability during long-term use of the cover plate 121.

According to some embodiments of this application, with reference to FIG. 5 and FIG. 10, the cover plate protrusion 1213 forms a cover plate groove 1214 on a side surface of the cover plate 121 away from the first current collector plate 3, and at least a portion of the second insulating separator 125 is fitted in the cover plate groove 1214.

For example, in the examples in FIG. 5 and FIG. 10, the cover plate protrusion 1213 is provided on the lower side of the cover plate 121, and the cover plate groove 1214 is formed at a position corresponding to the upper side of the cover plate 121. The cover plate through hole 1212 extends through a bottom wall of the cover plate groove 1214 and the cover plate protrusion 1213. The second insulating separator 125 is fitted in the cover plate groove 1214, and an outer peripheral surface of the second insulating separator 125 is attached to inner wall surface of the cover plate groove 1214. In this configuration, the cover plate groove 1214 may have positioning effect on the second insulating separator 125, to facilitate assembly of the cover plate 121 and the second insulating separator 125, thereby improving assembly efficiency of the cover plate assembly 12. In addition, the cover plate groove 1214 may have a limiting effect on the second insulating separator 125, to prevent the second insulating separator 125 from rotating on a plane of the cover plate 121, improve connection stability between the cover plate 121 and the second insulating separator 125, and improve stability during use of the cover plate assembly 12. It will be noted that the foregoing "at least a portion" means that a portion of the second insulating separator 125 is fitted in the cover plate groove 1214, and another portion of the second insulating separator 125 is located outside the cover plate groove 1214. Certainly, "at least a portion" may also mean that the entire second insulating separator 125 is fitted in the second insulating separator 125, as long as separation of the cover plate 121 and the connecting member 126 can be better implemented. This may be specifically set based on use requirements to better meet actual application.

Alternatively, the connecting member 126 may be a polygonal shape or an oblong shape. For example, when the connecting member 126 is a polygonal shape, a contact area between the connecting member 126 and the second insulating separator 125 is large, which increases a compressing area of the connecting member 126 on the second insulating separator 125, improves tightness of assembling of the connecting member 126 and the second insulating separator 125, and further improves connection tightness of each component of the cover plate assembly 12. When the connecting member 126 is an oblong shape, the contact area and a welding surface between the connecting member 126 and the second insulating separator 125 are increased. In addition, the connecting member 126 has a simple structure and is convenient for production, which improves production efficiency of the connecting member 126. In addition, four corners of the connecting member 126 may be provided in an arc shape, which facilitates mounting and transportation and also improves aesthetics of the connecting member 126.

According to some embodiments of this application, with reference to FIG. 15, a width of the connecting member 126 is w, a diameter of the terminal post 122 is d₇, and w and d₇ satisfy 3.5 mm≤w-d₇≤6 mm. For example, when a difference between the width w of the connecting member 126 and the diameter d₇ of the terminal post 122 is greater than 6 mm, a connection area between the connecting member 126 and the terminal post 122 is small, and a width of the connecting member 126 is large, which reduces connection stability between the connecting member 126 and the terminal post 122. When the difference between the width w of the connecting member 126 and the diameter d₇ of the terminal post 122 is less than 3.5 mm, a distance between an edge of the connecting member 126 in a width direction and an edge of an upper end of the terminal post 122 is small, and the width of the connecting member 126 is also small, which reduces structural strength of the connecting member 126 and is unfavorable for long-term use of the connecting member 126. Therefore, the width w of the connecting member 126 and the diameter d₇ of the terminal post 122 is set to satisfy 3.5 mm≤w-d₇≤6 mm, the distance between the edge of the connecting member 126 in the width direction and the edge of the upper end of the terminal post 122 is moderate, which improves structural strength of the connecting member 126, also improves connection stability between the connecting member 126 and the terminal post 122, and facilitates long-term stable use of the connecting member 126 and the terminal post 122.

Optionally, the connecting member 126 is a stamped and formed part made of aluminum. Therefore, production and manufacturing efficiency of the connecting member 126 is high, and manufacturing accuracy is also high, which facilitates long-term use of the connecting member 126. In addition, stamping and forming the aluminum improves flatness of the connecting member 126. In addition, the aluminum part has good conductivity, which helps the current carriers flow through the connecting member 126.

According to some embodiments of this application, with reference to FIG. 4, FIG. 5, and FIG. 10, the sealing member 127 includes a first sealing segment 1271 and a second sealing segment 1272. The first sealing segment 1271 is disposed between the outer peripheral surface of the terminal post 122 and the inner peripheral wall of the cover plate through hole 1212. The second sealing segment 1272 is connected to an end of the first sealing segment 1271 adjacent to the first current collector plate 3. The second sealing segment 1272 is located between the first insulating separator 124 and the first terminal post segment 1221. For example, in the examples in FIG. 4, FIG. 5, and FIG. 10, the first sealing segment 1271 is located above the second sealing segment 1272, and an outer peripheral surface of the sealing member 127 is in a stepped shape. The first sealing segment 1271 is located between the outer peripheral surface of the first terminal post segment 1221 and an inner wall surface of the cover plate through hole 1212, and an upper surface of the first sealing segment 1271 is in contact with a lower surface of the second insulating separator 125. An upper surface of the second sealing segment 1272 abuts against the lower surface of the cover plate protrusion 1213, and a lower surface of the second sealing segment 1272 contacts the upper surface of the second terminal post segment 1222. In this configuration, tightness of the connection between the terminal post 122, and the cover plate 121 and the first insulating separator 124 is strengthened, sealing performance of the cover plate assembly 12 is further improved, and the insulation effect between the cover plate 121 and the terminal post 122 is further strengthened, which improves use performance of the cover plate assembly 12. In addition, the sealing member 127 has a simple structure and is convenient for production, which improves production efficiency of the sealing member 127.

Optionally, the sealing member 127 is injection molded from fluororubber. Therefore, fluororubber has excellent corrosion resistance and atmospheric aging resistance, thereby extending the service life of sealing member 127. In addition, injection molding improves molding quality and overall stability of the sealing member 127, and also improves production efficiency and manufacturing accuracy of the sealing member 127, which better facilitates long-term use of the sealing member 127.

Further, with reference to FIG. 2, FIG. 3, and FIG. 21, the battery cell 100 includes a separator 7. The separator 7 is disposed in the shell 11, the separator 7 is located between an end of the electrode core 20 away from the first tab 201 and an inner wall of the shell 11, and the electrode core 20 is separated from the inner wall of the shell 11 through the separator 7. For example, in the examples in FIG. 2, FIG. 3, and FIG. 21, the separator 7 is disposed at an end of the shell 11 in the vertical direction, and the separator 7 is located between a lower end of the electrode core 20 and a bottom wall of the shell 11. In this configuration, the electrode core 20 is separated from the shell 11 through the separator 7, to prevent the current carrier on the electrode core 20 from flowing through the shell 11, and reduce the structural impedance of the battery cell 100. In addition, an end of the separator 7 adjacent to the electrode core 20 does not contact the bottom wall of the shell 11. The separator 7 has a protective effect on the electrode core 20, which can prevent the electrode core 20 from directly contacting the shell 11 and causing damage to the electrode core 20. This extends service life of the electrode core 20 and extends service life of the battery cell 100. In addition, mounting operations of the separator 7 are simple, and the separator 7 is placed inside the shell 11, which improves assembling efficiency of the battery cell 100.

According to some embodiments of this application, with reference to FIG. 2, and FIG. 22 to FIG. 24, at least one through hole 71 is formed on the separator 7. For example, in examples in FIG. 2, and FIG. 22 to FIG. 24, the through hole 71 extends through the separator 7 in a thickness direction (for example, the vertical direction in FIG. 2) of the separator 7. In this configuration, an electrolyte may be stored in the through-hole 71, which increases electrolyte storage space and reduces a risk of electrolyte overflow, and prevents damage to the battery cell 100.

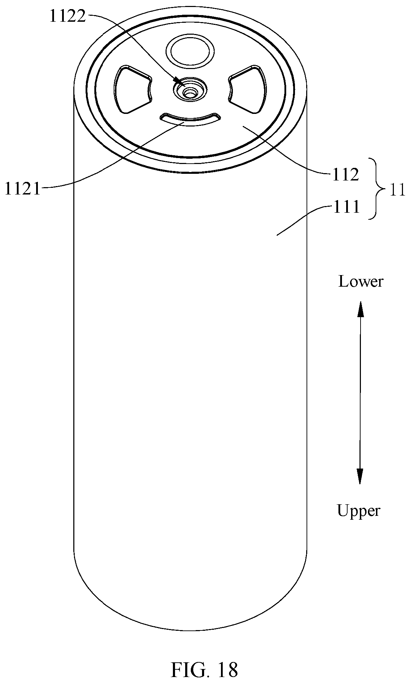

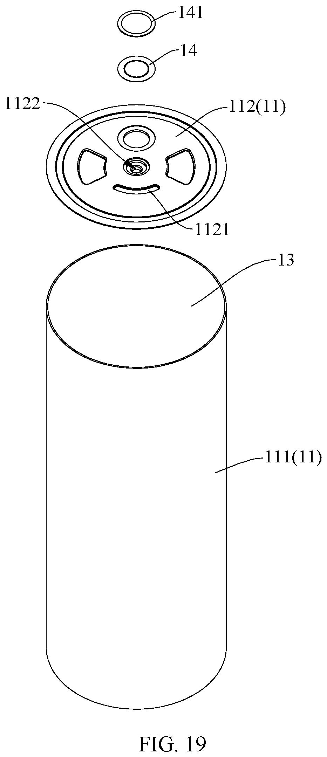

With reference to FIG. 18 and FIG. 19, a pressure relief apparatus 14 is disposed on the housing 1, the pressure relief apparatus 14 is configured to be capable of releasing internal pressure of the battery cell 100, and the pressure relief apparatus 14 is located on a side of the housing 1 away from the separator 7. For example, in the examples in FIG. 18 and FIG. 19, the pressure relief apparatus 14 is located on an outer wall at a lower end of the housing 1. In this configuration, when gas inside the battery cell 100 is too high and reaches a threshold, gas inside the battery cell 100 may be released by using the pressure relief apparatus 14. The pressure relief apparatus 14 is configured to relieve the pressure of the battery cell 100, which facilitates normal use of the battery cell 100.

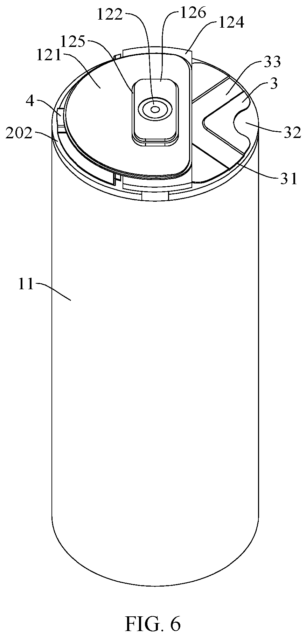

According to some embodiments of this application, with reference to FIG. 19, the housing 1 includes a shell body 111 and a bottom cover plate 112 that are connected to each other. The electrode core 2 is separated from the bottom cover plate 112 through the separator 7, and the pressure relief apparatus 14 is disposed on the bottom cover plate 112. For example, in the example in FIG. 6, the bottom cover plate 112 is located at a lower end of the shell body 111, and the bottom cover plate 112 is connected to the shell body 111 through welding. The pressure relief apparatus 14 is disposed on a side wall of the bottom cover plate 112 away from the separator 7. Therefore, the housing 1 is separately provided, so that manufacturing accuracy of the shell body 111 and the bottom cover plate 112 is improved, and manufacturing accuracy of the housing 1 is improved. For example, the pressure relief apparatus 14 is disposed on the bottom cover plate 112 of the shell body 111. The pressure relief apparatus 14 and the bottom cover plate 112 may be of an integrally formed structure or separately disposed structures. For example, the pressure relief apparatus 14 is a region with a weak structure formed on the bottom cover plate 112, such as the pressure relief apparatus 14 being a region on the bottom cover plate 112 on which a score groove is provided. Certainly, the pressure relief apparatus 14 and the bottom cover plate 112 may also be of separate structures. The pressure relief apparatus 14 can be connected to the bottom cover plate 112 in a configuration such as welding. Correspondingly, the pressure relief apparatus 14 may be one of components such as an explosion-proof valve, explosion-proof sheet, an air valve, a pressure relief valve, or a safety valve. It will be noted that the pressure relief apparatus 14 may alternatively be disposed on the shell body 111 to relieve pressure inside the battery cell 100.

With reference to FIG. 18 and FIG. 19, at least a portion of the pressure relief apparatus 14 is opposite to the through hole 71 in the thickness direction of the separator 7. For example, in examples in FIG. 18 and FIG. 19, the at least portion of the pressure relief apparatus 14 is in communication with the through-hole 71. In this configuration, the through-hole 71 has a function of an exhaust channel. When internal pressure of the battery cell 100 is too high, the gas inside the battery cell 100 may flow through the through-hole 71 to the pressure relief apparatus 14 and then be discharged outside the battery cell 100. This facilitates pressure relief of the battery cell 100, also facilitates smooth opening of the pressure relief apparatus 14, and improves safe use of the battery cell 100. It will be noted that "at least a portion" means that only a portion or all of the pressure relief apparatus 14. This may be specifically set based on use requirements to better meet actual application.

According to some embodiments of this application, an area that a projection of the at least portion of the pressure relief apparatus 14 onto the separator 7 in the thickness direction of the separator 7 overlaps the through-hole 71 is S₁ (that is, an area of the pressure relief apparatus 14 opposite to the through-hole 71 in the thickness direction of the separator 7), a cross-sectional area of the pressure relief apparatus 14 taken along a plane perpendicular to the thickness direction of the separator 7 (that is, a cross-sectional area of the pressure relief apparatus 14 taken along a plane perpendicular to the vertical direction) is S₂, and S₁ and S₂ satisfy 50%≤S₁/S₂≤100%. For example, when a ratio S₁/S₂ of the area S₁ of the at least portion of the pressure relief apparatus 14 opposite to the through-hole 71 in the thickness direction of the separator 7 to the cross-sectional area S₂ of the pressure relief apparatus 14 is less than 50%, a cross-sectional area of the exhaust channel of the pressure relief apparatus 14 is small. As a result, after the pressure relief apparatus 14 is opened, an amount of gas flowing through the exhaust channel of the pressure relief apparatus 14 per unit time is small, which reduces a gas exhaust speed of the battery cell 100 and is unfavorable for pressure relief of the battery cell 100. Therefore, the area S₁ of the at least portion of the pressure relief apparatus 14 opposite to the through-hole 71 in the thickness direction of the separator 7 and the cross-sectional area S₂ of the pressure relief apparatus 14 are set to satisfy 50%≤S₁/S₂≤100%, to effectively ensure a pressure relief capability of the pressure relief apparatus 14, and guarantee a pressure relief area of the battery cell 100. As a result, after the pressure relief apparatus 14 is opened, the amount of gas flowing through the exhaust channel of the pressure relief apparatus 14 per unit time is large, which increases the gas exhaust speed of the battery cell 100 and improves safe use of the battery cell 100.

According to some embodiments of this application, a cross-sectional area of the through-hole 71 taken along a plane perpendicular to the thickness direction of the separator 7 is S₃, a cross-sectional area of the separator 7 taken along a plane perpendicular to the thickness direction of the separator 7 is S₄, and S₃ and S₄ satisfy 30%≤S₃/S₄≤80%. For example, when a ratio S₃/S₄ of the cross-sectional area S₃ of the through-hole 71 taken along the plane perpendicular to the thickness direction of the separator 7 to the cross-sectional area S₄ of the separator 7 taken along the plane perpendicular to the thickness direction of the separator 7 is less than 30%, the cross-sectional area of the through-hole 71 is small, resulting in a small electrolyte storage space. Consequently, the electrolyte is prone to overflowing during injection, and the battery cell 100 is easily damaged. In addition, the through-hole 71 is small, which is not convenient for liquid injection into the battery cell 100. When the ratio S₃/S₄ of the cross-sectional area S₃ of the through-hole 71 taken along the plane perpendicular to the thickness direction of the separator 7 to the cross-sectional area S₄ of the separator 7 taken along the plane perpendicular to the thickness direction of the separator 7 is greater than 80%, the through-hole 71 on the separator 7 occupies a large space. This reduces structural strength of the separator 7 and is unfavorable to long-term use of the separator 7. Therefore, the cross-sectional area S₃ of the through-hole 71 taken along the plane perpendicular to the thickness direction of the separator 7 and the cross-sectional area S₄ of the separator 7 taken along the plane perpendicular to the thickness direction of the separator 7 are set to satisfy 30%≤S₃/S₄≤80%, to help increase the electrolyte storage space, reduce the risk of electrolyte overflow, and prevent damage to the battery cell 100. In addition, structural strength of the separator 7 is ensured, to improve the protective effect of the separator 7 on the electrode core 20 and extend the service life of the battery cell 100.

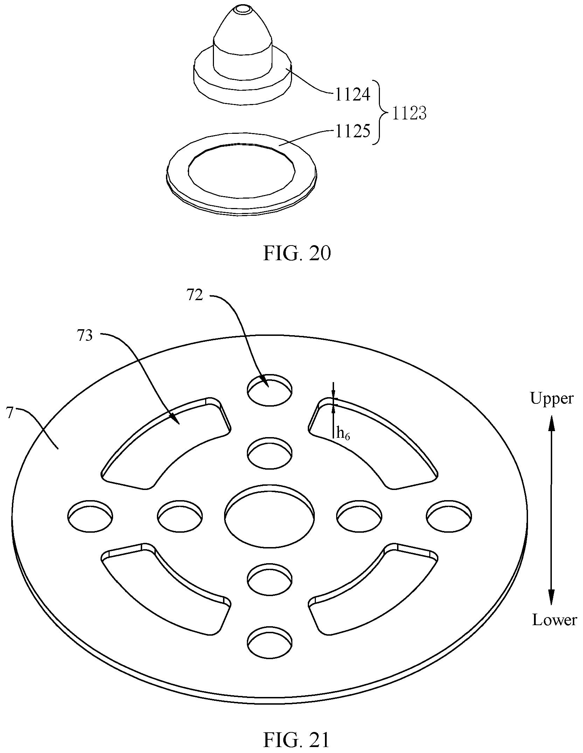

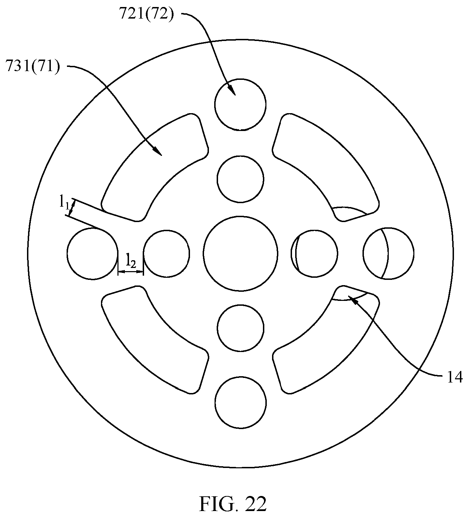

According to some embodiments of this application, with reference to FIG. 21 and FIG. 22, there are a plurality of through-holes 71. In descriptions of this application, "a plurality of" means two or more. A plurality of through-holes 71 form at least one first through-hole group 72 and at least one second through-hole group 73. The first through-hole group 72 includes a plurality of first through-holes 721, and the plurality of first through-holes 721 are spaced apart in a radial direction of the separator 7. The second through-hole group 73 includes a plurality of second through-holes 731, and the plurality of second through-holes 731 are spaced apart in a circumferential direction of the separator 7. The plurality of second through-holes 731 and the plurality of first through-holes 721 are spaced apart from each other.

For example, in an example in FIG. 22, the second through-hole group 73 includes four second through-holes 731, and the four second through-holes 731 are spaced apart in the circumferential direction of the separator 7. The first through-hole group 72 and the second through-hole group 73 are spaced apart from each other, and a plurality of first through-holes 721 are provided between two adjacent second through-holes 731. In this configuration, a quantity and arrangement of the through-holes 71 are both moderate, which further increases the electrolyte storage space, thereby further preventing electrolyte overflow and preventing damage to the battery cell 100. In addition, an amount of materials used in the separator 7 is reduced. This reduces production costs of the separator 7 and also reduces weight of the separator 7, thereby reducing weight of the battery cell 100. Moreover, this facilitates alignment of at least one of the plurality of through-holes 71 with the pressure relief apparatus 14, which permits communication between the through-hole 71 and the pressure relief apparatus 14 and improves smoothness of gas discharge, and also facilitates assembling of the separator 7 (that is, after the separator 7 is rotated along a central axis of the separator 7, alignment between the through-hole 71 and the pressure relief apparatus 14 can still be ensured). Moreover, a layout of the first through-hole group 72 and the second through-hole group 73 is optimised. When normal use of the separator 7 is ensured, structural strength of the separator 7 may also be improved, which improves stability during long-term use of the separator 7, and also enhances aesthetics of the separator 7. It will be noted that a quantity and arrangement of the first through-holes 721, and a quantity and arrangement of the second through-holes 731 may be specifically set based on use requirements to better meet actual application. For example, reference is made to FIG. 21 to FIG. 23, which are diagrams showing the separator 7 in different statuses relative to the pressure relief apparatus 14 after the separator 7 is rotated by a specific angle.

According to some embodiments of this application, with reference to FIG. 21, a cross-sectional area of the second through-holes 731 taken along a plane perpendicular to the thickness direction of the separator 7 is greater than a cross-sectional area of the first through-holes 721 taken along a plane perpendicular to the thickness direction of the separator 7. For example, in an example in FIG. 21, the first through-holes 721 may be provided in a circular shape, the second through-holes 731 may be provided in a polygonal shape, and the second through-holes 731 extends in a curved configuration in the circumferential direction of the separator 7. In this configuration, when the separator 7 is assembled with the housing 1, the separator 7 may be placed at any angle in the circumferential direction of the separator 7. That is, after the separator 7 is rotated relative to the housing 1, the second through-holes 731 may always be aligned with the pressure relief apparatus 14. This facilitates pressure relief of the battery cell 100, effectively ensures normal use of the pressure relief apparatus 14, and further improves safe use of the battery cell 100. In addition, this improves aesthetics of the separator 7. Moreover, the first through-holes 721 and the second through-holes 731 have simple structures and are convenient for production and manufacturing, which facilitates mass production of the separator 7. It will be noted that the shapes of the first through-holes 721 and the second through-holes 731 may be specifically set based on use requirements to better meet actual application.

According to some embodiments of this application, with reference to FIG. 21, cross-sectional areas of the plurality of first through-holes 721 taken along the plane perpendicular to the thickness direction of the separator 7 are all the same. This improves balance of the separator 7, which enhances stability of the separator 7 after mounting, and also simplifies the structure of the separator 7. This is conducive to mass production of the separator 7.

According to some other embodiments of this application, with reference to FIG. 21, cross-sectional areas at least two of the plurality of first through-holes 721 taken along the plane perpendicular to the thickness direction of the separator 7 are different. Therefore, the structural strength of the separator 7 is ensured, and a plurality of first through-holes 721 with different cross-sectional areas can be provided to increase cross-sectional areas of a plurality of through-holes 71. This facilitates alignment of the first through-holes 721 with the pressure relief apparatus 14, and also effectively increases the electrolyte storage space. In addition, this facilitates optimised provision of the first through-holes 721 based on arrangement of the second through-holes 731. Therefore, arrangement of the plurality of first through-holes 721 and the plurality of second through-holes 731 is more compact, to optimize a spatial design of the separator 7.

According to some embodiments of this application, with reference to FIG. 21, there are a plurality of first through-hole groups 72, and the plurality of first through-hole groups 72 are spaced apart in the circumferential direction of the separator 7. The second through-holes 731 are located between two adjacent first through-hole groups 72. For example, in an example in FIG. 21, there are four first through-hole groups 72, and the four first through-hole groups 72 and the four second through-holes 731 are spaced apart in the circumferential direction of the separator 7. The first through-hole groups 72 and the second through-holes 731 are symmetrical about the center of the separator 7. In this configuration, joint functions of a plurality of first through-hole groups 72 further reduce the weight of the separator 7, and further increases the electrolyte storage space. In addition, aesthetics of the separator 7 is improved, and stability of the separator 7 is also improved. This enables the separator 7 to better protect the electrode core 20, and also facilitates mass production of the separator 7.

According to some embodiments of this application, with reference to FIG. 22, a minimum distance between any second through-holes 731 and the first through-holes 721, in the adjacent first through-hole group 72, adjacent to an edge of the separator 7 is l₁, and l₁ satisfies 0.5 mm≤l₁≤3 mm. For example, when the minimum distance l₁ between any second through-holes 731 and the first through-holes 721, in the adjacent first through-hole group 72, adjacent to the edge of the separator 7 is less than 0.5 mm, a distance between the second through-holes 731 and the first through-holes 721, in the adjacent first through-hole group 72, adjacent to the edge of the separator 7 is close. This reduces structural strength of the separator 7, causes the separator 7 to be prone to breakage, and shortens the service life of the separator 7. When the minimum distance l₁ between any second through-holes 731 and the first through-holes 721, in the adjacent first through-hole group 72, adjacent to the edge of the separator 7 is greater than 3 mm, after the separator 7 is mounted, a connection portion between any second through-holes 731 and the first through-holes 721, in the adjacent first through-hole group 72, adjacent to the edge of the separator 7 is likely to block the pressure relief apparatus 14. This affects gas exhaust of the pressure relief apparatus 14, and is unfavorable to normal use of the battery cell 100. Therefore, the minimum distance l₁ between any second through-holes 731 and the first through-holes 721, in the adjacent first through hole group 72, adjacent to the edge of the separator 7 is set to satisfy 0.5 mm≤l₁≤3 mm, and a layout of the first through-holes 721 and the second through-holes 731 is optimised. This improves structural strength of the separator 7, thereby enhancing protective effect of the separator 7 on the battery cell 100 and also extending service life of the separator 7. In addition, this facilitates alignment of the through-hole 71 with the pressure relief apparatus 14, thereby expanding the exhaust channel of the pressure relief apparatus 14 and allowing gas to be smoothly discharged to the outside of the battery cell 100.

According to some other embodiments of this application, with reference to FIG. 22, a minimum distance between two adjacent first through-holes 721, in the first through-hole group 72, adjacent to an edge of the separator 7 is l₂, and l₂ satisfies 0.5 mm≤l₂≤3 mm. For example, when the minimum distance l₂ between the two adjacent first through-holes 721, in the first through-hole group 72, adjacent to the edge of the separator 7 is less than 0.5 mm, a connection portion between the two adjacent first through-holes 721, in the first through hole group 72, adjacent to the edge of the separator 7 is narrow. This reduces structural strength of the separator 7, causes the separator 7 to be prone to breakage and damage, and shortens service life of the separator 7. When the minimum distance l₂ between the two adjacent first through-holes 721, in the first through-hole group 72, adjacent to the edge of the separator 7 is greater than 3 mm, after the separator 7 is mounted, an area that the connection portion between the two adjacent first through-holes 721, in the first through-hole group 72, adjacent to the edge of the separator 7 blocks the pressure relief apparatus 14 is large. This easily affects gas exhaust of the pressure relief apparatus 14, and is unfavorable for safe use of the battery cell 100. Therefore, the minimum distance l₂ between the two adjacent first through-holes 721, in the first through-hole group 72, adjacent to the edge of the separator 7 is set to satisfy 0.5 mm≤l₂≤3 mm, a distance between two adjacent first through holes 721 is moderate. This improves structural strength of the separator 7 and also facilitates normal use of the separator 7. In addition, this facilitates alignment of the through-hole 71 with the pressure relief apparatus 14, thereby expanding the exhaust channel of the pressure relief apparatus 14 and allowing gas to be smoothly discharged to the outside of the battery cell 100.

According to still some embodiments of this application, with reference to FIG. 22, a minimum distance between any second through-holes 731 and the first through-holes 721, in the adjacent first through-hole group 72, adjacent to an edge of the separator 7 is l₁, and l₁ satisfies 0.5 mm≤l₁≤3 mm. In addition, a minimum distance between two adjacent first through-holes 721, in the first through-hole group 72, adjacent to an edge of the separator 7 is l₂, and l₂ satisfies 0.5 mm≤l₂≤3 mm. Therefore, structural strength of the separator 7 is improved, to improve the protective effect of the separator 7 on the electrode core 20 and also extend service life of the separator 7. In addition, the pressure relief apparatus 14 may easily communicate with the through-hole 71, so that when internal pressure of the battery cell 100 is too high, gas can be smoothly discharged through the through-hole 71 and the pressure relief apparatus 14, which improves safe use of the battery cell 100.

Further, with reference to FIG. 22, a thickness of the separator 7 is h₆, and h₆ satisfy 0.3 mm≤h₆≤2 mm. For example, when the thickness h₆ of the separator 7 is less than 0.3 mm, a space size of the through hole 71 is small, resulting in a smaller amount of electrolyte stored in the through hole 71. This causes the electrolyte to easily overflow and causes the battery cell 100 to be easily damaged. When the thickness h₆ of the separator 7 is greater than 2 mm, the separator 7 occupies large space inside the housing 1 (that is, inside the accommodating cavity 13), which reduces space utilization inside the housing 1. Therefore, the thickness h₆ of the separator 7 is set to satisfy 0.3 mm≤h₆≤2 mm, so that the storage space of the electrolyte is increased. This prevents electrolyte overflowing during injection, and also rationalizes the space occupied by the separator 7 inside the housing 1, which improves space utilization inside the housing 1.

According to some alternative embodiments of this application, the separator 7 is a polyethylene terephthalate member or a polypropylene member. When the separator 7 is provided as the polyethylene terephthalate member, the polyethylene terephthalate member has electrical insulation properties, thereby preventing the current carriers on the electrode core 20 from flowing to the housing 1, and reducing structural impedance. When the separator 7 is provided as the polypropylene member, the polypropylene member also has electrical insulation properties, which can reduce structural impedance. In addition, material sources are abundant. In addition, polypropylene has high mechanical strength and good wear resistance, which improves the protective effect of the separator 7 on the electrode core 20 and extends service life of the separator 7.

Optionally, the separator 7 is injection molded. Therefore, molding quality of the separator 7 is improved, and production efficiency and manufacturing accuracy of the separator 7 are also improved.

Further, optionally, with reference to FIG. 18 and FIG. 19, the pressure relief apparatus 14 is welded to the housing 1, and a protective member 141 is provided on a side of the pressure relief apparatus 14 away from the housing 1. For example, in examples in FIG. 18 and FIG. 19, the protective member 141 is opposite to the pressure relief apparatus 14, and the protective member 141 is assembled with the housing 1. In this configuration, connection strength between the pressure relief apparatus 14 and the housing 1 is increased, to prevent the pressure relief apparatus 14 from falling off the housing 1. In addition, the protective member 141 can protect the pressure relief apparatus 14, thereby extending service life of the pressure relief apparatus 14. For example, the protective member 141 is injection molded from polyester resin. This facilitates production and manufacturing of the protective member 141, improves manufacturing efficiency of the protective member 141, and also improves structural strength of the protective member 141, which facilitates long-term use of the protective member 141.

According to some alternative embodiments of this application, the pressure relief apparatus 14 is formed by stamping or laser scoring steel, an initiation pressure is P, and P satisfies 0.5 Mpa≤P≤2 Mpa. Therefore, production and manufacturing efficiency of the pressure relief apparatus 14 is high, and manufacturing accuracy is also high, which improves assembly accuracy of the pressure relief apparatus 14 and the housing 1, and also facilitates long-term use of the pressure relief apparatus 14.

Optionally, with reference to FIG. 19, the shell body 111 is formed into a cylindrical shape by steel stamping or by rolling and winding a sheet material, and the bottom cover plate 112 is re-formed by steel stamping, the steel features corrosion resistance. Therefore, connection strength between the bottom cover plate 112 and a circumferential side wall of the shell body 111 is enhanced, thereby improving structural strength of the shell 11 and facilitating long-term stable use of the shell 11. In addition, stamping and forming the steel improves flatness of the bottom cover plate 112.

Furthermore, with reference to FIG. 18 and FIG. 19, a reinforcing rib 1121 is formed on a lower surface of the bottom cover plate 112. For example, in the examples in FIG. 18 and FIG. 19, the reinforcing rib 1121 is formed by recessing from the lower surface of the bottom cover plate 112 toward the upper surface of the bottom cover plate 112, and the reinforcing rib 1121 is opposite to a mounting position of the pressure relief apparatus 14 in a radial direction of the bottom cover plate 112. Therefore, structural strength of the bottom cover plate 112 is improved by the reinforcing rib 1121, thereby improving structural strength of the shell 11.

Optionally, the electrode core 20 is formed by winding, and the tabs adopt flattened tabs or cut-and-stacked tabs. The tabs are divided into two sides. One side is the first tab 201 (for example, a positive tab), and the first tab 201 is connected to the first current collector plate 3. The other side is the second tab 202 (for example, a negative tab), and the second tab 202 is connected to the second current collector plate 4. The first tab 201 and the second tab 202 are spaced apart in the radial direction of the electrode core 20. This facilitates production of the electrode core 20. In addition, this can prevent the first tab 201 and the second tab 202 from overlapping and causing a short circuit, facilitating long-term normal use of the battery cell 100 and extending service life of the battery cell 100.

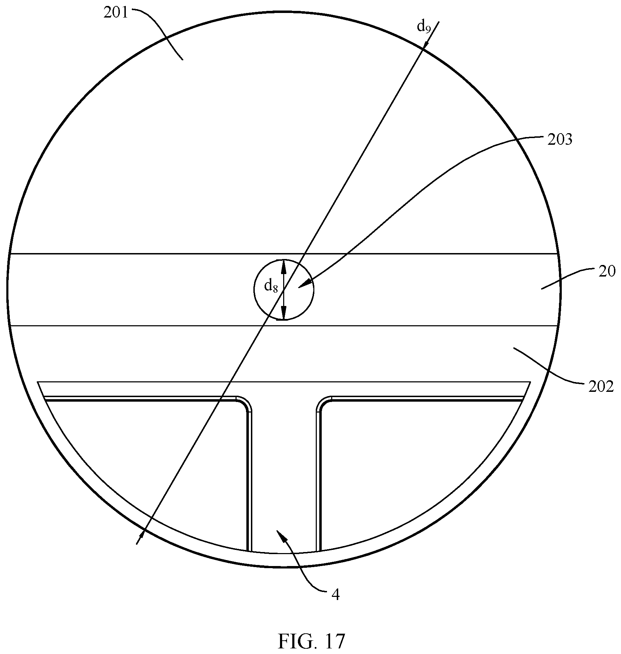

Further, optionally, with reference to FIG. 17, a central hole 203 is provided in a central region of the electrode core 20. The central hole 203 is located between the first tab 201 and the second tab 202. Opposite sides of the first tab 201 and the second tab 202 are both tangent to an edge of the central hole 203. A diameter of the central hole 203 is d₈, and d₈ satisfies 2 mm≤d₈≤10 mm. When the diameter d₈ of the central hole 203 is greater than 10 mm, areas of the first tab 201 and the second tab 202 are small. This reduces contact area between the first tab 201 and the corresponding first current collector plate 3, and contact area between the second tab 202 and the corresponding second current collector plate 4, which is unfavorable for normal use of the battery cell 100. When the diameter d₈ of the central hole 203 is less than 2 mm, a distance between the first tab 201 and the second tab 202 is small, which is prone to a short circuit caused by overlapping, and is unfavorable for normal use of the battery cell 100. Therefore, the diameter d₈ of the central hole 203 is set to satisfy 2 mm≤d₈≤10 mm. This can increase the contact area between the first tab 201 and the corresponding first current collector plate 3, and the contact area between and the second tab 202 and the second current collector plate 4 to reduce impedance of the battery cell 100, and can prevent a short circuit caused by overlapping of the first tab 201 and the second tab 202, which extends service life of the battery cell 100.

According to some embodiments of this application, with reference to FIG. 2, a side of the cover plate 121 away from the first current collector plate 3 is an arc-shaped edge. Therefore, the cover plate 121 has a simple structure and is convenient for production, which also improves aesthetics of the cover plate 121. Furthermore, when the cover plate 121 is connected to the shell 11, the arc-shaped edge of the cover plate 121 is attached to an outer peripheral surface of the shell 11, which facilitates assembly of the cover plate 121 and the shell 11, thereby improving assembly efficiency of the battery cell 100. In addition, a connection area between the cover plate 121 and other components of the battery cell 100, such as the second current collector plate 4, is increased, thereby improving stability during use of the cover plate 121.

Optionally, the cover plate 121 is a stamped and formed part made of steel. Therefore, production and manufacturing efficiency of the cover plate 121 is high, and manufacturing accuracy is also high, thereby improving connection tightness between the cover plate 121, and the terminal post 122 and the first current collector plate 3. Furthermore, flatness of the cover plate 121 is also improved. In addition, steel features corrosion resistance, which also facilitates long-term use of the cover plate 121. In addition, steel has good conductivity, which facilitates electrical connection between the second current collector plate 4 and the cover plate 121, to facilitate normal use of the battery cell 100.

According to some alternative embodiments of this application, both the first current collector plate 3 and the terminal post 122 are formed by stamping aluminum. An aluminum part has specific structural strength. This improves structural strength of the first current collector plate 3 and the terminal post 122, which facilitates long-term stable use of the first current collector plate 3 and the terminal post 122. In addition, stamping and forming the aluminum sheet improves flatness of the first current collector plate 3 and the terminal post 122, thereby improving use performance of the first current collector plate 3 and the terminal post 122. Moreover, a lower surface of the terminal post 122 adopts a flat design, which facilitates welding between the terminal post 122 and the first current collector plate 3. In addition, the aluminum part has conductivity, which helps the current carriers flow through the first current collector plate 3 and the terminal post 122, but is not limited thereto.

Optionally, the base plate 123 is a stamped and formed part made of steel. Therefore, production and manufacturing efficiency of the base plate 123 is high, and manufacturing accuracy is also high, thereby improving assembling tightness between the base plate 123 and the cover plate 121. Furthermore, flatness of the base plate 123 is also improved. In addition, steel features corrosion resistance and conductivity, which also facilitates long-term use of the base plate 123 and also facilitates electrical connection between the second current collector plate 4 and the base plate 123 through the cover plate 121.

According to some alternative embodiments of this application, with reference to FIG. 15 and FIG. 17, a width of the groove 33 is w₁, and a diameter of the electrode core 20 is d₉, w₁ satisfies 4 mm≤w₁≤0.4 d₉. In other words, a maximum value of the width of the groove 33 is related to the diameter of the electrode core 20, and is 0.4 times the diameter of the electrode core 20. For example, when the width w₁ of the groove 33 is greater than 0.4 d₉, the width of the groove 33 is large, which makes an area of another portion of the first current collector plate 3 small, and makes a contact area between the first current collector plate 3 and the second insulating member 6 small. This reduces connection stability between the first current collector plate 3 and the second insulating member 6. When the width w₁ of the groove 33 is less than 4 mm, the width of the groove 33 is small, which makes an area of the connecting protrusion 31 small, reduces a connection area between the first current collector plate 3 and the first tab 201. This reduces connection stability between the first current collector plate 3 and the first tab 201, and increases structural impedance of the battery cell 100. Therefore, the width w₁ of the groove 33 is set to satisfy 4 mm≤w₁≤0.4 d₉, so that the connection area between the first current collector plate 3 and the second insulating member 6 and the first tab 201 is increased. This increases connection stability between the first current collector plate 3, and the second insulating member 6 and the first tab 201, and reduces structural impedance of the battery cell 100, which facilitates use of the battery cell 100.

Optionally, materials of both the first insulating member 5 and the second insulating member 6 may be polyethylene terephthalate. Polyethylene terephthalate has excellent electrical insulation properties, and still has good insulation performance even under high temperature and high frequency conditions. Therefore, after the battery cell 100 has been used for a period of time and has generated heat, the first insulating member 5 and the second insulating member 6 still have good insulation properties, thereby preventing a short circuit from occurring in the internal components of the battery cell 100 and facilitating normal use of the battery cell 100.

According to some optional embodiments of this application, with reference to FIG. 18 to FIG. 20, a liquid injection hole 1122 is provided on the bottom cover plate 112, and a sealing structure 1123 that cooperates with the liquid injection hole 1122 is disposed at the liquid injection hole 1122. The sealing structure 1123 includes an elastic sealing gasket 1124 and a sealing cover 1125. A side of the elastic sealing gasket 1124 away from the electrode core 20 is connected to the sealing cover 1125. The sealing cover 1125 is welded to an inner wall of the elastic sealing gasket 1124 and the liquid injection hole 1122. Therefore, connection strength between the bottom cover plate 112 and the circumferential side wall of the shell body 111 is enhanced, thereby improving structural strength of the shell 11 and facilitating long-term stable use of the shell 11. In addition, manufacturing accuracy of the shell body 111 and the bottom cover plate 112 is improved, and manufacturing accuracy of the shell 11 is improved. In addition, after electrolyte is injected into the battery cell 100 through the liquid injection hole 1122, the elastic sealing gasket 1124 is configured to seal the liquid injection hole 1122, thereby preventing electrolyte from flowing out and preventing damage to the battery cell 100. The sealing cover 1125 further improves the sealing performance between the elastic sealing gasket 1124 and the liquid injection hole 1122, thereby further preventing electrolyte from flowing out and further preventing damage to the battery cell 100.

According to some embodiments of this application, with reference to FIG. 4 and FIG. 5, the terminal post 122 is opposite to a center of the end of the electrode core 20 (for example, the upper end of the electrode core 20). For example, in the example in FIG. 4 and FIG. 5, the lower side surface of the terminal post 122 is vertically opposite to a central position of the upper end of the electrode core 20. That is, the terminal post 122 is located at the central position of the upper end of the electrode core 20. This facilitates the connection between the terminal post 122 and the first current collector plate 3. That is, a welding trajectory of the first current collector plate 3 after the first current collector plate 3 is connected to the terminal post 122 is as close as possible to the center of the electrode core 20, to reduce structural impedance, increase the current-carrying capability, and improve use performance of the battery cell 300.

A manufacturing method, according to the embodiment of the second aspect of this application, for the battery cell 100 according to the embodiment of the first aspect includes the following steps.

S1: connect the first current collector plate 3 of the battery cell 100 to the terminal post 122 of the cover plate assembly 12 of the battery cell 100.

S2: connect the second current collector plate 4 of the battery cell 100 to the second tab 202 of the electrode core 20 of the battery cell 100, and connect the first current collector plate 3 that is connected to the terminal post 122 to the first tab 201 of the electrode core 20 to obtain an electrode core assembly 2.

S3: place the electrode core assembly 2 into the shell 11 of the housing 1 of the battery cell 100.

S4: separately connect the base plate 123 of the cover plate assembly 12 to the cover plate 121 and the shell 11.

Therefore, the first current collector plate 3 is connected to the terminal post 122, so that the first current collector plate 3 and the cover plate assembly 12 are connected as a whole. This allows the cover plate assembly 12 to be connected to other components of the battery cell 100, such as the first tab 201, through the first current collector plate 3. Compared with the conventional technologies of sequentially assembling the components in the cover plate assembly 12, this reduces assembly difficulty of the cover plate assembly 12 and other components, simplifies assembly operations, reduces assembly difficulty of the battery cell 100, and improves assembly efficiency of the battery cell 100. Furthermore, the second tab 202 is connected to the second current collector plate 4, and the second current collector plate 4 may collect the current on the second tab 202, so that the current carriers of the second tab 202 flow out through the second current collector plate 4. After the first current collector plate 3 is connected to the first tab 201, the electrode core 20, the first current collector plate 3, the second current collector plate 4, and the cover plate assembly 12 are connected as a whole to form the electrode core assembly 2. Assembly operations are simple, and this also facilitates the connection between the electrode core assembly 2 and other components of the battery cell 100, and the smooth current-carrier passage of the battery cell 100. In addition, the base plate 123 is connected to the cover plate 121 and the shell 11, so that the base plate 123 can be more securely connected to the cover plate 121, and the battery cell 100 is connected as a whole, to complete assembly of the battery cell 100. This lowers manufacturing difficulty of the battery cell 100, and improves manufacturing efficiency of the battery cell 100.

Based on the manufacturing method for the battery cell 100 according to the embodiment of the second aspect of this application, the manufacturing difficulty of the battery cell 100 is low, and manufacturing efficiency of the battery cell 100 is improved. In addition, assembly difficulty of the cover plate assembly 12 and other components is reduced, and assembly operations are simplified, which reduces assembly difficulty of the battery cell 100, and improves assembly efficiency of the battery cell 100. In addition, after the first current collector plate 3 is connected to the first tab 201, the electrode core 20, the first current collector plate 3, the second current collector plate 4, and the cover plate assembly 12 are connected as a whole to form the electrode core assembly 2. Assembly operations are simple, and this also facilitates the connection between the electrode core assembly 2 and other components of the battery cell 100, and the smooth current-carrier passage of the battery cell 100.

According to some embodiments of this application, after the second current collector plate 4 is connected to the second tab 202, the first insulating member 5 of the battery cell 100 is separately connected to the second tab 202 and the first tab 201. For example, the first insulating member 5 is disposed as an insulation adhesive, one side of the first insulating member 5 in a width direction is connected to the first tab 201, and the other side of the first insulating member 5 in the width direction is connected to the second tab 202. This achieves an insulated connection between the first tab 201 and the second tab 202, thereby preventing a short circuit from occurring between the first tab 201 and the second tab 202. Moreover, the first insulating member 5 is separately connected to the second tab 202 and the first tab 201 before the first current collector plate 3 is connected to the first tab 201, which can effectively avoid an electrical connection between the terminal post 122 and the second tab 202. This permits electrical connections between the first current collector plate 3, and the first tab 201 and the terminal post 122, and ensures normal use of the battery cell 100.

According to some embodiments of this application, after the first current collector plate 3 is connected to the first tab 201, the second insulating member 6 of the battery cell 100 is covered on a side of the first current collector plate 3 away from the first tab 201. For example, the second insulating member 6 is disposed as an insulation adhesive, and the second insulating member 6 is bonded to the upper side surface of the first current collector plate 3, so that the first current collector plate 3 is insulatedly connected to the base plate 123. This effectively prevents the current carriers on the first current collector plate 3 from flowing to the base plate 123, thereby ensuring that the current carriers of the positive electrode and the negative electrode of the battery cell 100 flow independently, which facilitates use of the battery cell 100. In addition, connection operations of the second insulating member 6 are simple, which reduces manufacturing difficulty of the battery cell 100 and better facilitates production and manufacturing of the battery cell 100.

According to some embodiments of this application, the first current collector plate 3 is welded to the terminal post 122. In this configuration, the connection between the first current collector plate 3 and the terminal post 122 is secure, and the first current collector plate 3 is not easy to fall off the cover plate assembly 12, thereby strengthening the reliability of the connection between the first current collector plate 3 and the cover plate assembly 12, which strengthens integrity of the battery cell 100 and extends service life of the battery cell 100. In addition, welding operations are simple, which facilitates production and manufacturing of battery cell 100.

According to some embodiments of this application, manufacturing of the cover plate assembly 12 includes the following steps.

The sealing member 127 of the cover plate assembly 12 is sleeved on the terminal post 122.

One end of the terminal post 122 sequentially passes through the first insulating separator 124, the cover plate 121, the second insulating separator 125, and the connecting member 126 of the cover plate assembly 12. The end of the terminal post 122 is connected to the connecting member 126, and the other end of the terminal post 122 is connected to the first current collector plate 3.

For example, the end of the terminal post 122 is the upper end of the terminal post 122. The upper end of the terminal post 122 sequentially pass through the first insulating separator 124, the cover plate 121, the second insulating separator 125, and the connecting member 126, and then is connected to the connecting member 126, so that the terminal post 122 passes through the first insulating separator 124, the cover plate 121, the second insulating separator 125, and the connecting member 126, to connect the first insulating separator 124, the cover plate 121, the second insulating separator 125, and the connecting member 126 as a whole. This strengthens integrity and sealing performance of the cover plate assembly 12, to facilitate use of the cover plate assembly 12. In addition, manufacturing steps of the cover plate assembly 12 are simple, which improves manufacturing efficiency of the cover plate assembly 12. Furthermore, the other end of the terminal post 122 is connected to the first current collector plate 3, so that the first current collector plate 3 and the cover plate assembly 12 are connected as a whole, which facilitates manufacturing of the battery cell 100.

According to some embodiments of this application, with reference to FIG. 4, FIG. 5, and FIG. 10, the terminal post 122 includes a first terminal post segment 1221 and a second terminal post segment 1222 that are connected to each other. One end of the first terminal post segment 1221 sequentially passes through the first insulating separator 124, the cover plate 121, the second insulating separator 125, and the connecting member 126, and then is connected to the connecting member 126. The other end of the first terminal post segment 1221 is connected to the second terminal post segment 1222. The second terminal post segment 1222 is located between the first insulating separator 124 and the first current collector plate 3.

For example, the first terminal post segment 1221 may be provided in a cylindrical shape, and the second terminal post segment 1222 may be provided in a plate shape. A lower end of the first terminal post segment 1221 is connected to an upper surface of the second terminal post segment 1222. An upper end of the first terminal post segment 1221 sequentially passes through the first insulating separator 124, the cover plate 121, the second insulating separator 125, and the connecting member 126, and then is connected to the connecting member 126. The second terminal post segment 1222 is located below the first insulating separator 124 and is connected to the first current collector plate 3. Therefore, the terminal post 122 has a simple structure, and assembly operations between the terminal post 122, and the first insulating separator 124, the cover plate 121, the second insulating separator 125, and the connecting member 126 are simple. This makes manufacturing steps of the cover plate assembly 12 simple, and better facilitates manufacturing of the cover plate assembly 12. In addition, manufacturing difficulty of the terminal post 122 is reduced, which better facilitates manufacturing of the cover plate assembly 12. Moreover, the first insulating separator 124 has a limiting effect on the second terminal post segment 1222 to limit upward movement of the second terminal post segment 1222, so that the connection between the terminal post 122 and the connecting member 126 is more secure, and sealing performance of the connection between the terminal post 122, and the first insulating separator 124, the cover plate 121, the second insulating separator 125, and the connecting member 126 is also improved.

According to some embodiments of this application, the end of the terminal post 122 is first riveted and then laser welded to the connecting member 126. Therefore, the terminal post 122 and the connecting member 126 may be quickly connected as a whole through riveting to obtain the cover plate assembly 12, which also improves positioning accuracy of the terminal post 122 and the connecting member 126. Then, the end of the terminal post 122 is welded to the connecting member 126, to further strengthen connection strength between the terminal post 122 and the connecting member 126, so that the terminal post 122 and the connecting member 126 are securely connected together. This prevents the terminal post 122 from falling off the connection, extends the service life of the terminal post 122, thereby improving stability and use performance during long-term use of the cover plate assembly 12, and extending the service life of the cover plate assembly 12.

According to some embodiments of this application, the base plate 123 is first laser welded to the cover plate 121, and then is laser welded to the shell 11. Therefore, the base plate 123 is laser welded to the cover plate 121, so that the base plate 123 and the electrode core assembly 2 can be quickly connected as a whole, and connection operations between the base plate 123 and the cover plate 121 are simple. Furthermore, the base plate 123 is connected to the cover plate 121 to facilitate the connection between the base plate 123 and the shell 11, so that laser welding operations between the base plate 123 and the shell 11 are simple. If the base plate 123 is first connected to the shell 11 and then connected to the cover plate 121, welding difficulty between the base plate 123 and the cover plate 121 increases, which reduces manufacturing efficiency of the battery cell 100.

According to some embodiments of this application, the first current collector plate 3 is laser welded to the first tab 201, and/or the second current collector plate 4 is laser welded to the second tab 202. For example, the connection between the first current collector plate 3 and the second current collector plate 4 includes the following three cases: first, only the first current collector plate 3 is laser welded to the first tab 201, and the second current collector plate 4 is connected to the second tab 202 in another manner. Second, only the second current collector plate 4 is laser welded to the second tab 202 are laser welded, and the first current collector plate 3 is connected to the first tab 201 in another manner. Third, the first current collector plate 3 is laser welded to the first tab 201, and the second current collector plate 4 is laser-welded to the second tab 202. Therefore, the connection between the first current collector plate 3 and the first tab 201 is secure, and the connection between the second current collector plate 4 and the second tab 202 is secure. This prevents the second current collector plate 4 from falling off the second tab 202, and also prevents the first current collector plate 3 from falling off the first tab 201, and therefore improves connection stability of the first current collector plate 3 and the second current collector plate 4. Furthermore, compared with conventional torque welding, a connection through laser welding imposes no restriction on a current carrier flowing through the first current collector plate 3 and the second current collector plate 4, and welding costs are low. This further reduces the production costs of the battery cell 100, and improves a welding yield and detectability of the battery cell 100. In addition, a welding process is simple, which improves feasibility of a welding process.

According to some embodiments of this application, the manufacturing method for the battery cell 100 further includes the following steps: after the base plate 123 is connected to the housing 1, electrolyte is injected into the housing 1 through the liquid injection hole 1122 of the housing 1, and the liquid injection hole 1122 is sealed after the liquid injection is completed. For example, in examples in FIG. 18 and FIG. 19, the liquid injection hole 1122 is formed at a lower end of the shell 11, and the liquid injection hole 1122 communicates with the accommodating cavity 13. After liquid injection is completed, the liquid injection hole 1122 is sealed, which can effectively prevent electrolyte leakage in the battery cell 100, to ensure normal use of the battery cell 100 and extend the service life of the battery cell 100.

Optionally, the separator 7 is first placed inside the shell 11, and then the electrode core assembly 2 is placed inside the shell 11 of the housing 1 of the battery cell 100. For example, the separator 7 may be directly placed inside the shell 11, so that the separator 7 contacts a bottom wall of the shell 11. There is no need to limit a direction between the separator 7 and the bottom wall of the shell 11. After rotating along an axis in the vertical direction, the separator 7 can still reduce impedance of the battery cell 100, and still facilitates smooth discharge of gas generated inside the battery cell 100 from the pressure relief apparatus 14. This greatly reduces manufacturing difficulty of the battery cell 100, better facilitates manufacturing of the battery cell 100, and further improves manufacturing efficiency of the battery cell 100.

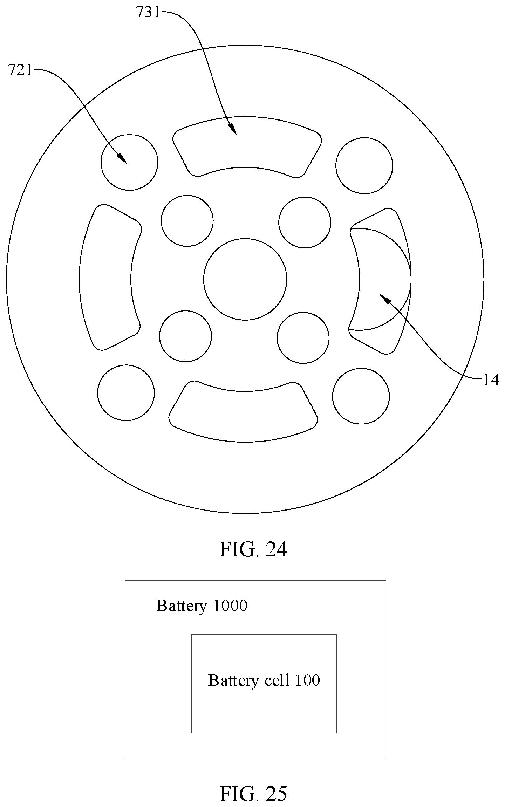

The battery 1000 according to the embodiment of the third aspect of this application includes the battery cell 100 according to the embodiment of the first aspect, or the battery cell 100 manufactured by using the manufacturing method for the battery cell 100 according to the embodiment of the second aspect, as shown in FIG. 25.

According to the battery 1000 in an embodiment of this application, the battery cell 100 is used, or the battery cell 100 manufactured by using the manufacturing method for the battery cell 100 is used, which reduces structural impedance of the battery 1000, better facilitates use of the battery 1000, and improves use performance of the battery 1000. In addition, manufacturing difficulty of the battery 1000 is reduced, and manufacturing efficiency of the battery 1000 is improved.

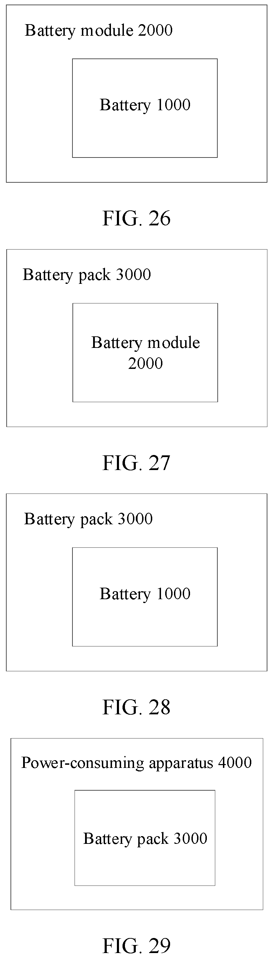

The battery module 2000 according to the embodiment of the fourth aspect of this application includes the battery 1000 according to the embodiment of the third aspect described above, as shown in FIG. 26.

According to the battery module 2000 in an embodiment of this application, the battery 1000 is used, which improves use performance of the battery module 2000, facilitates production and manufacturing of the battery module 2000, and improves production efficiency of the battery module 2000.

The battery pack 3000 according to the embodiment of the fifth aspect of this application includes the battery 1000 according to the embodiment of the third aspect or the battery module 2000 according to the embodiment of the fourth aspect, as shown in FIG. 27 and FIG. 28.

According to the battery pack 3000 in an embodiment of this application, the battery 1000 or the battery module 2000 is used, which improves use performance of the battery pack 3000, reduces manufacturing difficulty of the battery pack 3000, and improves manufacturing efficiency of the battery pack 3000, and facilitates mass production of the battery pack 3000.

A power-consuming apparatus 4000 according to an embodiment of a sixth aspect of this application includes the battery pack 3000 according to the embodiment of the fifth aspect, as shown in FIG. 29.

According to the power-consuming apparatus 4000 in this application, the battery pack 3000 is used, which improves use performance of the power-consuming apparatus 4000. The power-consuming apparatus 4000 may be a vehicle, an electric two-wheeler, an electric multiwheeler, an energy storage cabinet, an uncrewed aerial vehicle, a ship, or the like.

Other configurations and operations of the battery 1000, the battery module 2000, the battery pack 3000, and the power-consuming apparatus 4000 according to embodiments of this application are known to a person of ordinary skill in the art. Details are not described herein again.

In the descriptions of this application, it will be understood that directions or location relationships indicated by the terms such as "center", "longitudinal direction", "transverse direction", "length", "width", "thickness", "up", "down", "front", "rear", "left", "right", "vertical", "horizontal", "top", "bottom", "inside", "outside", "clockwise", "counterclockwise", "axial direction", "radial direction", and "circumferential direction" are based on the directions or the location relationships shown in the accompanying drawings, and are merely intended to describe this application and simplify the descriptions, but not intended to indicate or imply that an indicated apparatus or component shall have a specific direction or be formed and operated in a specific direction, and therefore will not be understood as a limitation on this application.

In the descriptions of this application, "a plurality of" means two or more than two.

In description of this specification, reference term such as "an embodiment", "some embodiments", "example embodiments", "examples", "specific examples", or "some examples" are intended to indicate that specific features, structures, materials, or characteristics described with reference to the embodiment or example is included in at least one embodiment or example of this application. In this specification, example expressions of the terms do not necessarily mean the same embodiment or example.

Although embodiments of this application have been shown and described, a person of ordinary skill in the art will understand various changes, modifications, substitutions, and variations may be made to the embodiments without departing from the principles and purposes of this application. The scope of this application is defined by the claims and equivalents thereof.

## Claims

1. A battery cell (100), comprising:
a housing (1), the housing (1) comprising a shell (11) and a cover plate assembly (12), the cover plate assembly (12) being disposed on the shell (11), the cover plate assembly (12) and the shell (11) jointly defining an accommodating cavity (13), the cover plate assembly (12) comprising a cover plate (121) and a terminal post (122), and the terminal post (122) being insulatedly connected to the cover plate (121);
an electrode core (20), the electrode core (20) being disposed in the accommodating cavity (13), a first tab (201) and a second tab (202) being disposed on the electrode core (20), the first tab (201) and the second tab (202) having opposite polarities, and the first tab (201) and the second tab (202) being located at the same end of the electrode core (20);
a first current collector plate (3), the first current collector plate (3) being disposed in the accommodating cavity (13), the first current collector plate (3) being located between the first tab (201) and the cover plate assembly (12), and the terminal post (122) being electrically connected to the first tab (201) through the first current collector plate (3); and
a second current collector plate (4), the second current collector plate (4) being disposed in the accommodating cavity (13), the second current collector plate (4) being located between the second tab (202) and the cover plate assembly (12), the cover plate (121) being electrically connected to the second tab (202) through the second current collector plate (4), and the second current collector plate (4) being insulated from both the terminal post (122) and the first current collector plate (3).

2. The battery cell (100) according to claim 1, wherein the second current collector plate (4) is spaced apart from both the terminal post (122) and the first current collector plate (3).

3. The battery cell (100) according to claim 1 or 2, further comprising:
a first insulating member (5), the first insulating member (5) being disposed between the first tab (201) and the second tab (202), and the first tab (201) and the second tab (202) being insulated from each other through the first insulating member (5).

4. The battery cell (100) according to any one of claims 1 to 3, wherein the first tab (201) and the second tab (202) are opposite to each other in a radial direction of the electrode core (20).

5. The battery cell (100) according to any one of claims 1 to 4, wherein the cover plate assembly (12) further comprises:
a base plate (123), the base plate (123) being connected to the shell (11), an opening (1231) being formed on the base plate (123), the cover plate (121) being disposed at the opening (1231), and the terminal post (122) passing through the cover plate (121).

6. The battery cell (100) according to claim 5, wherein an outer peripheral edge of the cover plate (121) has a stepped part (1211), an edge of the opening (1231) has a mating part (1232) extending toward a center of the opening (1231), and the mating part (1232) is fitted in the stepped part (1211).

7. The battery cell (100) according to claim 5 or 6, wherein on a side on which the second current collector plate (4) is located, a minimum distance between the edge of the opening (1231) and an outer peripheral edge of the base plate (123) is d₁, and d₁ satisfies 1.5 mm≤d₁≤4 mm.

8. The battery cell (100) according to any one of claims 5 to 7, further comprising:
a second insulating member (6), the second insulating member (6) being disposed between the base plate (123) and the first current collector plate (3), and the base plate (123) and the first current collector plate (3) being insulated from each other through the second insulating member (6).

9. The battery cell (100) according to any one of claims 1 to 8, wherein at least one of the second current collector plate (4) and the first current collector plate (3) is a single-layer structural member.

10. The battery cell (100) according to any one of claims 1 to 9, wherein the second current collector plate (4) further comprises:
a first connecting part (41), the second current collector plate (4) being connected to the second tab (202) through the first connecting part (41), and the first connecting part (41) extending in a direction perpendicular to a central axis of the electrode core (20);
a second connecting part (42), the second connecting part (42) being disposed on a side of the first connecting part (41) away from the second tab (202); and
a third connecting part (43), the third connecting part (43) being connected to a side of the second connecting part (42) away from the first connecting part (41), the third connecting part (43) extending in the direction perpendicular to the central axis of the electrode core (20), and the second connecting part (42) being vertically connected between the third connecting part (43) and the first connecting part (41).

11. The battery cell (100) according to claim 10, wherein the first connecting part (41) comprises two first sub-connecting parts (411) that are spaced apart, each first sub-connecting part (411) comprises a first side edge (4111) and a second side edge (4112), the first side edge (4111) and the second side edge (4112) are not on the same straight line, the first side edges (4111) of the two first sub-connecting parts (411) are opposite to each other, and the second side edges (4112) of the two first sub-connecting parts (411) are located on the same straight line;
the second connecting part (42) comprises two second sub-connecting parts (421) that are spaced apart, one side of one of the second sub-connecting parts (421) is connected to the first side edge (4111) and the second side edge (4112) of one of the first sub-connecting parts (411), and one side of the other second sub-connecting part (421) is connected to the first side edge (4111) and the second side edge (4112) of the other first sub-connecting part (411); and
the third connecting part (43) comprises a third sub-connecting part (431), and the third sub-connecting part (431) is connected to the other sides, opposite to the first side edges (4111) of the two first sub-connecting parts (411), of the two second sub-connecting parts (421).

12. The battery cell (100) according to claim 11, wherein the third sub-connecting part (431) is connected between the other sides, opposite to the first side edges (4111) of the two first sub-connecting parts (411), of the two second sub-connecting parts (421).

13. The battery cell (100) according to claim 11 or 12, wherein the third connecting part (43) comprises a fourth sub-connecting part (432), one side of the fourth sub-connecting part (432) is connected to the other sides, opposite to the second side edges (4112) of the two first sub-connecting parts (411), of the two second sub-connecting parts (421), and the third sub-connecting part (431), and the other side of the fourth sub-connecting part (432) extends horizontally in a direction away from the first connecting part (41).

14. The battery cell (100) according to any one of claims 11 to 13, wherein the first side edge (4111) and the second side edge (4112) are perpendicular to each other.

15. The battery cell (100) according to any one of claims 11 to 14, wherein the second current collector plate (4) is symmetrically disposed with respect to an extension direction of the third sub-connecting part (431).

16. The battery cell (100) according to any one of claims 1 to 15, wherein a height of the second current collector plate (4) is h₃, a distance between a side surface of the cover plate (121) facing the first current collector plate (3) and a side surface of the first current collector plate (3) away from the cover plate (121) is h₄, and h₃ and h₄ satisfy 0 mm≤h₃-h₄≤1 mm.

17. The battery cell (100) according to any one of claims 1 to 16, wherein a connecting protrusion (31) is provided on a side surface of the first current collector plate (3) adjacent to the first tab (201), and the first current collector plate (3) is connected to the first tab (201) through the connecting protrusion (31).

18. The battery cell (100) according to claim 17, wherein the connecting protrusion (31) comprises a first protrusion part (311) and a second protrusion part (312), one end of the first protrusion part (311) is connected to one end of the second protrusion part (312), the other end of the first protrusion part (311) and the other end of the second protrusion part (312) extend in a direction away from each other, an included angle between the first protrusion part (311) and the second protrusion part (312) is β, and β satisfies 20°≤β≤80°.

19. The battery cell (100) according to claim 18, wherein a notch (32) is formed at a central edge of the first current collector plate (3) away from the electrode core (20).

20. The battery cell (100) according to claim 19, wherein the notch (32) is located between the other end of the first protrusion part (311) and the other end of the second protrusion part (312).

21. The battery cell (100) according to any one of claims 17 to 20, wherein the connecting protrusion (31) is formed by a portion, of a side surface of the first current collector plate (3) away from the first tab (201), protruding toward a side surface adjacent to the first tab (201), and the connecting protrusion (31) forms a groove (33) on the side surface of the first current collector plate (3) away from the first tab (201), to form the connecting protrusion (31) on the side surface adjacent to the first tab (201), a depth of the groove (33) is h₅, and h₅ satisfies 0 mm<h₅≤2 mm.

22. The battery cell (100) according to any one of claims 1 to 21, wherein the first current collector plate (3) and the cover plate assembly (12) are integrated as a whole.

23. The battery cell (100) according to any one of claims 1 to 22, wherein the first current collector plate (3) comprises a main body part (35), the main body part (35) is configured to connect to the first tab (201), the main body part (35) is exposed on the cover plate (121) in a thickness direction of the first current collector plate (3), a shortest distance between the main body part (35) and a center of the terminal post (122) is d₀, and d₀ satisfies 2 mm≤d₀≤8 mm.

24. The battery cell (100) according to any one of claims 1 to 23, wherein the terminal post (122) passes through the cover plate (121), a first insulating separator (124) and a sealing member (127) are disposed between an outer peripheral surface of the terminal post (122) and the cover plate (121), the sealing member (127) is sleeved on the terminal post (122), and the first insulating separator (124) is disposed on outer peripheral sides of the sealing member (127) and the terminal post (122).

25. The battery cell (100) according to claim 24, further comprising:
a connecting member (126), the connecting member (126) being connected to an end of the terminal post (122) away from the first current collector plate (3) in the thickness direction of the first current collector plate (3); and
a second insulating separator (125), the second insulating separator (125) being disposed between the connecting member (126) and the cover plate (121).

26. The battery cell (100) according to claim 25, wherein a second insulating separator groove (1251) is formed on the second insulating separator (125), the connecting member (126) is fitted in the second insulating separator groove (1251), and the connecting member (126) is insulated from the cover plate (121) through the second insulating separator (125).

27. The battery cell (100) according to claim 25 or 26, wherein the terminal post (122) comprises a first terminal post segment (1221) and a second terminal post segment (1222) that are connected to each other, the first terminal post segment (1221) passes through the cover plate (121) and the second insulating separator (125) and then is connected to the connecting member (126), the second terminal post segment (1222) is located on a side of the cover plate (121) facing the first current collector plate (3), and the second terminal post segment (1222) is connected to the first current collector plate (3).

28. The battery cell (100) according to claim 27, wherein an anti-rotation protrusion (1241) is provided on a side surface of the first insulating separator (124) adjacent to the first current collector plate (3), the anti-rotation protrusion (1241) and the side surface of the first insulating separator (124) adjacent to the first current collector plate (3) jointly define an anti-rotation groove (1242), a side of the anti-rotation groove (1242) adjacent to a center of the first current collector plate (3) is open, and the second terminal post segment (1222) is fitted in the anti-rotation groove (1242); and
an extension part (34) is disposed on the first current collector plate (3), at least a portion of an outer peripheral edge of the extension part (34) is fitted in the anti-rotation groove (1242), and the extension part (34) is located on a side of the second terminal post segment (1222) away from the cover plate (121).

29. The battery cell (100) according to claim 28, wherein the at least portion of the outer peripheral edge of the extension part (34) is adapted to a shape of an inner peripheral wall of the anti-rotation groove (1242).

30. The battery cell (100) according to any one of claims 27 to 29, wherein a cover plate protrusion (1213) is provided on a side surface of the cover plate (121) adjacent to the first insulating separator (124); and
a first insulating separator groove (1243) is formed on a side surface of the first insulating separator (124) adjacent to the cover plate (121), and the cover plate protrusion (1213) is fitted in the first insulating separator groove (1243).

31. The battery cell (100) according to claim 30, wherein a first insulating separator through hole (1244) is formed on a bottom wall of the first insulating separator groove (1243), and the first terminal post segment (1221) passes through the first insulating separator through hole (1244).

32. The battery cell (100) according to any one of claims 25 to 31, wherein a width of the connecting member (126) is w, a diameter of the terminal post (122) is d₇, and w and d₇ satisfy 3.5 mm≤w-d₇≤6 mm.

33. The battery cell (100) according to any one of claims 1 to 32, further comprising:
a separator (7), the separator (7) being disposed in the shell (11), the separator (7) being located between an end of the electrode core (20) away from the first tab (201) and an inner wall of the shell (11), and the electrode core (20) being separated from the inner wall of the shell (11) through the separator (7).

34. The battery cell (100) according to claim 33, wherein at least one through-hole (71) is formed on the separator (7), a pressure relief apparatus (14) is disposed on the housing (1), the pressure relief apparatus (14) is configured to be capable of releasing internal pressure of the battery cell (100), the pressure relief apparatus (14) is located on a side of the housing (1) away from the separator (7), and at least a portion of the pressure relief apparatus (14) is opposite to the through-hole (71) in a thickness direction of the separator (7).

35. The battery cell (100) according to claim 34, wherein an area that a projection of the at least portion of the pressure relief apparatus (14) onto the separator (7) in the thickness direction of the separator (7) overlaps the through-hole (71) is S₁, a cross-sectional area of the pressure relief apparatus (14) taken along a plane perpendicular to the thickness direction of the separator (7) is S₂, and S₁ and S₂ satisfy 50%≤S₁/S₂≤100%.

36. The battery cell (100) according to claim 34 or 35, wherein a cross-sectional area of the through-hole (71) taken along a plane perpendicular to the thickness direction of the separator (7) is S₃, a cross-sectional area of the separator (7) taken along a plane perpendicular to the thickness direction of the separator (7) is S₄, and S₃ and S₄ satisfy 30%≤S₃/S₄≤80%.

37. A battery (1000), comprising the battery cell (100) according to any one of claims 1 to 36.

38. A battery module (2000), comprising the battery (1000) according to claim 37.

39. A battery pack (3000), comprising the battery (1000) according to claim 37 or the battery module (2000) according to claim 38.

40. A power-consuming apparatus (4000), comprising the battery pack (3000) according to claim 39.
